(19) Europäisches Patentamt

European Patent Office

Office européen des brevets

(11) **EP 1 727 072 A1**

(12) **EUROPEAN PATENT APPLICATION**

(43) Date of publication:
**29.11.2006 Bulletin 2006/48**

(51) Int Cl.:
*G06K 9/00* (2006.01)  *G06K 9/62* (2006.01)

(21) Application number: **05253204.1**

(22) Date of filing: **25.05.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **THE BABRAHAM INSTITUTE
Babraham, Cambridge CB2 4AT (GB)**

(72) Inventors:
• **DURRANT, Simon
Dept of Informatics
Brighton BN1 9QH (GB)**

• **FENG, Jianfeng
Dept of Computer Science
Coventry CV4 7AL (GB)**

(74) Representative: **Lawrence, John
Barker Brettell,
138 Hagley Road,
Edgbaston
Birmingham B16 9PW (GB)**

(54) **Signal processing, transmission, data storage and representation**

(57)    A method of signal processing a native signal which includes a true signal and noise, the noise being at a different frequency than the true signal, comprising summing a plurality of negatively correlated instantiations of the native signal to produce a processed signal that is more representative of said true signal than is said native signal.

Fig. A1

EP 1 727 072 A1

Printed by Jouve, 75001 PARIS (FR)

**(Cont. next page)**

*Fig. A2*

*Fig. A3*

**Description**

This invention relates to signal processing, transmission, and to data storage and data representation. Aspects of the invention relate to image processing, and other aspects to improving the detectability of a signal in a background, and other aspects to decoupling a plurality of signals in a mixed, multi-component signal, and other aspects to how to represent data efficiently and how to store it, transmit it, and process it efficiently, and other aspects to how to differentiate between two similar signals.

In signal processing, the determination of what is the "true" signal uncontaminated with noise and other extraneous artefacts, is a very well worked field. Much work has been done on the extraction of signals from noise, and cleaning up signals, and in decoupling mixed signals. There has also been much work in the field of in image processing. "Signals" includes time varying signals of the same sensor, and images.

A well-known way of improving the quality of a captured image is to capture many images relating to the same scene and to superimpose them so as to reduce the effect of noise. For example it is known to use a pixellated image device, such as a CCD camera (e.g. a satellite image), to capture a number of images of the same scene, some of which will have random noise affecting some pixels and others of which will have noise affecting other pixels, and the plurality of "snap-shots" of the scene are summed (the value of the same pixel in an image is summed) and then normalised (divided by the number of snap-shots). This is better than relying upon any one "snap-shot" since any one snap-shot can have the value of individual pixels altered by noise. The effect of random noise on any one pixel is ameliorated by taking an average value of the same pixel over a number of different representations of the same scene. This is equivalent to increasing the exposure time on the image capture device (which will reduce the effect of random fluctuating noise on any individual pixel).

According to an aspect of the invention there is provided a method of signal or image processing applied to an image or a signal that has a plurality of elements each of which has a value, the method comprising:

negatively correlating the value of the elements relative to each other to produce modified values for the elements for a first instance of the signal or image;
negatively correlating the value of the elements relative to each other to produce modified values for the elements for a second, or further respective, instances of the signal or image; and
summing for each element of the signal or image the modified values of each respective element over the available instances of the signal or image to create a processed signal or image comprising for each element a sum of the negatively correlated modified values of that element summed over the available instances of the signal or image.

According to another aspect the invention comprises a method of signal processing a native signal which includes a true signal and noise, the noise being at a different frequency than the true signal, comprises summing a plurality of negatively correlated instantiations of the native signal to produce a processed signal that is more representative of said true signal than is said native signal.

It has been found that this technique of negative correlation of values of elements or components of the image improves the accuracy of the extraction of a signal from noise, and improves the production of image contaminated by noise.

Optionally, the processed signal or image may be normalised, for example by dividing the value for each element that is the sum of the negatively correlated modified values by the number of instances of the signal or image used in the summing process.

Sometimes it is not possible to leave the image, or signal, capture time of a device open long enough to reduce the effect of noise to a low enough level (for example, a detector may become saturated after a certain time, e.g. CCD detectors need cancelling and refreshing every so often). The current inventive technique can help improve the results obtained by such devices.

Moreover, the signals or images obtained are actually better than those obtained simply by averaging, without modifying the detected values.

The elements of a signal may comprise time-spaced values of a signal, preferably sequentially, and even more preferably contiguously, arranged time-spaced values (slices in time).

The elements of an image may comprise pixels of the image.

In one embodiment we take a native signal and generate from it at least one, and preferably a plurality of, negatively correlated instantiation(s) of said native signal to form said plurality of negatively correlated instantiations of said native signal. We may achieve negative correlation of the instantiations of said native signal by imposing a phase difference upon them.

The instantiations of the native signal may be acquired e.g. from sensors, or from memory, with a phase difference existing between them.

A phase shift of half or about half of a period of noise desired to be reduced ($\frac{1}{2f}$ where f is the noise frequency) may be introduced between the native instantiation of the signal and the negatively correlated generated instantiation of the signal. A number of instantiations of the signal may be phase shifted, one for each frequency of noise to be reduced, and they each may be phase shifted about half a period for the respective frequencies of noise they are to reduce ($\sum_{fn} \frac{1}{2fn}$, where the fn are noise frequencies).

We have realised that by adding a phase-shifted copy of a signal to be original signal we can reduce or eliminate noise at a frequency that is commensurate with a half period (of the noise frequency) phase shift. By adding versions of the signal that are phase shifted by respective different amounts we can reduce or eliminate noise at a corresponding number of different noise frequencies. We therefore aim to reduce noise at frequencies that are different from the desired signal frequency. We may add only a limited number of instantiations (phase-shifted), for example we may add only 1,2,3,4,5,6,7 or so. It is believed that if too many phase-shifted instantiations are added, the signal quality may be affected. We may add only 1 or 2 or so instantiations to the native signal.

In one embodiment of the invention we improve the signal to noise quality of a captured signal of a telecommunications device using the present invention. For example, a mobile telephone, or a wireless networked device (audio or visual or both), or a wire-network device.

Broadcast transmissions using electromagnetic waves can be detected better using the present invention.

Using negatively correlated signals from multiple detectors may be an application of the invention.

Another simple example of where the invention may find use is in a digital camera, where automatically taking a series of closely spaced (in time) snap-shots of the same scene and then digitally processing the pixellated images to produce a processed image of the scene is possible.

Similarly, in the field of astronomy, or satellite imagery (in which images of areas of the earth are taken), taking a plurality of images of the same image (spaced in time) and negatively correlating the values of the image pixels relative to each other within the same snap-shot image, and then summing the modified snap-shot images, can be an area of the application of the invention. People spend hundreds of millions of dollars on better astronomical images and on better satellite photographs. The technique may be used to ameliorate the effects of atmospheric aberration of images, and/or atmospheric noise. Taking a master image and generating negatively correlated instantiations of that image is another application.

Another area where digital images can be improved is in medical imaging of the body. MRI imaging, ultrasound imaging, CAT scans, X-ray imaging, and the like, can all be improved using the present invention.

NDT (non-destructive testing), e.g. ultrasound scans, and non-visible wavelength imaging of articles, can be improved by embodiments of the current invention.

Isolating a signal from a background can also be useful in the medical area (e.g. brainwave traces or ECG traces, heart rate monitoring: or other example things where a signal fluctuates with time).

Brain-machine interface devices (where the brain controls movement of mechanical devices, e.g. by nerve impulses - such as an artificial hand) are another area of application of the invention.

Whilst telecommunications have been discussed as an area of application of the invention, it is also applicable over small distances, such as within an electronic device (to reduce signal/image degradation within a device). In some imaging devices random fluctuations come from within the device itself (e.g. temperature fluctuations can affect images produced by radiometers (e.g. IR or microwave images).

The invention also has applications within a computer processor: signals are still being communicated.

According to another aspect the invention comprises a signal processor programmed to take a plurality of negatively corrected instantiations of a native signal and sum them to produce a processed signal.

The signal processor may be programmed to generate the plurality of negatively correlated instantiations from a source signal.

The signal processor may be programmed to generate a plurality of instantiations of the native signal, each phase shifted by an amount relative to the native signal, and wherein in order to suppress noise at a particular selected noise frequency one of the generated instantiations is phase shifted relative to the original native signal by about half a period of the selected noise frequency, each generated instantiations of the native signal being phase shifted by an amount to suppress noise at a different noise frequency.

According to an aspect of the invention there is provided a computer program product which when run on a computer processor is adapted, in use, to take, or create, a plurality of negatively correlated native signals comprising a true signal and noise and sum them so as to preferentially reduce noise that is at a different frequency to the true signal.

According to an aspect of the invention there is provided a method of processing a multi-component mixed signal to decouple the component signals comprising:

acquiring a plurality of instantiations of the mixed signal, the instantiations being negatively correlated, and solving the equation:

$$\mathbf{Y} = \mathbf{W}\mathbf{X}$$

where **Y** is a matrix of recovered source component signals, **X** is a matrix of the mixed signals, **W** is a demixing matrix that when multiplied with **X** produces **Y,** and wherein solving the equation comprises both maximising the independence of the recovered components of **Y** whilst also attaining a target correlation of the recovered components **Y**.

According to another aspect of the invention there is provided a computer-implemented method of processing mixed signals to recover decoupled separate components from a mixed multi-component signal, the method comprising:

(i) acquiring a plurality of mixed component signals, **X** (vector) ; and
(ii) finding a, or the best, simultaneous solutions to restrictions to both: -

(a) maximise independence of the recovered separate component signals given by rows of **Y** (matrix) in the relationship **Y = WX,** where **W** (matrix) is a decoupling matrix for operating on **X** so as to produce **Y**; and also
(b) exhibit a selected target correlation between the separate component signals (rows of **Y**).

Higher order moments of Y (i.e. above $2^{nd}$ order correlation) are typically constrained to be independent. The signal components comprising rows of **Y**, may be different in number from the rows of **X**, the mixed data components.
The method may comprise evaluating solutions for the equation **Y = WX** using one or more pre-selected assumed correlations as the target correlation between the basis functions of **W** (the columns or rows of **W**).
Possible solutions to the equation **Y = WX** may be evaluated iteratively in two steps at each iteration, said steps comprising a first step which seeks to evaluate the independence of higher order moments of the rows of **Y**, and a second step which seeks to evaluate the compliance of the rows of **Y** having a particular selected putative degree of correlation. Maximising the independence of the higher moments of **Y** may be achieved by minimising the difference between the joint and marginal distributions of the rows of **Y**.
The method of calculating the standard K-L divergence function

$$\Rightarrow \mathrm{D}_{m}\ (\mathbf{W})\ =\ \sum_{i}^{m}\ \mathrm{H}(y_i)\ -\ \mathrm{H}(x)\ -\ \log\ |\ \det(\mathbf{W})\ |$$

in a first step, and applying a negative correlation penalty term, $\lambda(F(W))$, in a second step. The K-L divergence function may be optimised using a first optimisation technique and the reduction of the correlation between the derived components may be optimised using a second optimisation technique, optionally a gradient-based step. This allows us to use existing algorithms to iteratively update the K-L function.
The method may comprise iteratively updating the values of the decoupling matrix **W** using the gradient of the objective function with respect to **W** to control the updating of the values of **W**, optimally using the following iterative steps to update the decoupling matrix **W**:-

$$\Delta\bar{\mathbf{W}}\ =\ \eta\big[\mathbf{W}^{-T} - \mathbf{x}\varphi(\mathbf{W}\mathbf{x})\big] \qquad (14)$$

$$\Delta\mathbf{W}\ =\ \Delta\bar{\mathbf{W}} - \lambda\frac{dF(\mathbf{W})}{d\mathbf{W}} \qquad (15)$$

A correlation update step of the matrix **W** may be calculated in the **Y** domain and is converted back to the **W** domain for the actual update of **W**. This can overcome the problem of trying to solve an unstable matrix.
In many embodiments the decoupling matrix **W** is calculated using an ICA update step and then the resultant components of **Y** are made more negatively correlated, or are correlated more closely to a specified set level of correlation, using a gradient step evaluation of a correlation penalty function:

$$\frac{dF(Y)}{Y} = \begin{bmatrix} 2\sum y_i \\ 2\sum y_i \\ \vdots \\ 2\sum y_i \end{bmatrix}$$

where

$$F(Y) = \sum YY^T$$

A separate negative correlation update step allows flexibility in the choice of techniques used to solve the equations.

According to an aspect of the invention there is provided a computer-implemented method of recovering individual component signals from a mixed, multi-component, signal comprising:

(i) acquiring a plurality of instantiations of the mixed signal;
(ii) maximising the independence of the components of the recovered component signals;
(iii) ensuring the higher order moments of a demixing matrix **W** are minimised, **W** being such that when it operates on the recovered component signals the mixed signals are produced;
(iv) calculating the recovered component signals of the multi-component mixed signal so as to satisfy the constraints of (ii) and (iii).

According to another aspect the invention comprises a computer product comprising software adapted to be run on a computer processor having access to a computer memory, the product being adapted to separate component signals **Y** of a plurality of mixed component signals **X** held in the computer memory by using the equation **Y = WX** and by finding a solution, or the best solution for **Y**, whilst satisfying a restraint to maximise the independence of the recovered separate component signals given by the rows of **Y**, and also satisfying a restraint for the separate component signals to have a specified target correlation.

The computer product is typically adapted to cause a first evaluation of **W** to be stored in memory and updated iteratively by successive future evaluations of **W**. **W** may be updated by calculating and storing in memory:-

$$\Delta \bar{W} = \eta \left[ W^{-T} - x\varphi(Wx) \right] \tag{14}$$

$$\Delta W = \Delta \bar{W} - \lambda \frac{dF(W)}{dW} \tag{15}$$

According to an aspect of the invention there is provided software encoded on a data carrier which when run on a computer processor is adapted to cause the processor to modify values representing the magnitude of a signal at a point in time so as to negatively correlate the modified value in relation to other values of the magnitude of the signal at other points in time stored in a memory accessible to said processor; and to sum the modified values of the signal over a series of instantiations of said signal to produce a summed negatively correlated value for the signal at different points in time.

According to an aspect of the invention there is provided software encoded on a data carrier which when run on a computer processor is adapted to cause the processor to modify a pixel value of a pixel in an image, so as to negatively correlate the modified pixel value in relation to other pixel values of pixels of an image, stored in a memory accessible to said processor; and to sum the modified pixel value, over a series of instantiations of said image to produce a summed negatively correlated pixel value over different images.

According to another aspect of the invention there is provided a computer-implemented method of determining basis functions **a** to represent data

$$\mathbf{X} = \mathbf{AS},$$

where **S** = original data matrix wherein the source components **s** are the rows of **S**,

**X** = mixed components derived from **S,**

**A** = the mixing matrix which when it operates on **S** produces **X**, and wherein the basis functions a are the columns of matrix **A**,

the method comprising:

(i) acquiring a plurality of mixed components **X**; and
(ii) finding a solution, or the best simultaneous solutions, to restrictions to both:-

(a) maximise independence of the source components, s; and also
(b) exhibit a selected target correlation between the basis functions a.

The basis functions may be specified as being negatively correlated. In many embodiments the final values of the source components are required to be non-negative, and/or the source components are constrained to be independent.

It is usually desirable to evaluate possible solutions to the equation iteratively in two steps at each iteration, said steps comprising a first step in which the independence of the source components **s** is evaluated, and a second step in which compliance of the columns of **A** having a particular selected putative degree of correlation is evaluated. Maximising the independence of the source components **s** may be achieved by minimising the difference between the joint and marginal distributions of the rows of **S**. An objective function that may be minimised is:-

$$\Rightarrow \mathrm{D}_{\mathrm{n\backslash r}}(\mathbf{W}) \; = \; \sum_{i}^{m} \; \mathrm{H}(s_i) \; - \; \mathrm{H}(\mathbf{x}) \; - \; \log \; \left| \det(\mathbf{W}) \right| \; + \; \lambda \; (\mathrm{F}(\mathbf{W}))$$

The value of $\lambda$ is putatively set at one or more different values and the function is minimised for each value so as to establish a set of components (rows of **S**) and basis functions (columns of **A**) which best allow **X** to be represented in fewer dimensions with minimal loss of information.

The   method   may   comprise   calculating   the   K-L   divergence   function

$$\mathrm{D}_{\mathrm{n\backslash r}}(\mathbf{W}) \; = \; \sum_{i}^{m} \; \mathrm{H}(s_i) \; - \; \mathrm{H}(\mathbf{x}) \; - \; \log \; \left| \det(\mathbf{W}) \right|,$$ and may comprise optimising the K-L function using a first optimisation technique, and the reduction of the correlation between the derived basis functions is optimised using a second, optionally different, optimisation technique. This allows us to use existing ICA algorithms to evaluate the independence of the source components **s**, is evaluated using an ICA algorithm.

The method may use a second algorithm which may use a gradient approach, to optimise the basis functions of **A**.

The method may comprise iteratively updating the values of the pseudoinverse of the basis function matrix **A**, called **W**, using the gradient of the objective function with respect to **W** to control updating of the values of **W**, and so by implication the values of **A**.

The method may use a matrix **W** used in the update procedure, given by the Moore-Penrose pseudoinverse, such that $\mathbf{W} = \mathbf{A}^{+}$.

The following iterative steps may be used to update the matrix **W**:-

$$\Delta \bar{\mathbf{W}} \; = \; \eta [\mathbf{W}^{-T} - \mathbf{x}\varphi(\mathbf{Wx}) \tag{14}$$

$$\Delta \mathbf{W} \; = \; \Delta \bar{\mathbf{W}} - \lambda \frac{dF(\mathbf{W})}{d\mathbf{W}} \tag{15}$$

A correlation update step of the matrix **W** is usefully calculated in the **A** domain and is converted back to the **W** domain for the actual update of **W**, in many embodiments. This can help to make the problem solvable/find a stable **W** matrix.

The matrix **W** is optimally calculated using an ICA update step and then the basis functions in **A** are made more negatively correlated, or are correlated more closely to a specified set level of correlation, using a gradient step evaluation of a correlation penalty function:

$$\frac{dF(A)}{A} = \begin{bmatrix} 2\sum a_i \\ 2\sum a_i \\ \vdots \\ 2\sum a_i \end{bmatrix}$$

where

$$F(A) = \sum AA^T$$

There is in many embodiments a separate negative correlation update step; which has advantages, including being able to use known ICA techniques to solve the K-L equation, and provides flexibility with the technique used to update the negative correlation penalty term, and allows us to switch domain for the two update steps.

An aspect of this invention relates to discriminating and/or differentiating between similar images and signals.

There are times when it is necessary to discriminate or differentiate between similar signals or images. For example a security code of a signal encoding a password needs to be differentiatable from a signal encoding a different password. Another example is that an image of a fingerprint of one person (or iris, or retinal pattern, or face pattern, etc.) needs to be differentiable from an image of another person's fingerprint (or biometric image) if fingerprint analysis (biometric image analysis) is to be effective at identifying a fingerprint (biometric image) with a person.

At present the emphasis is upon obtaining the best quality signal or image possible and using that to determine if the images/signals are the same.

According to an aspect of the invention there is provided a method of looking for identity of, or differentiating between, two non-identical signals or images comprises representing the signal or image as a number of bases, and looking for identity of, or differentiating between, the bases-representations.

A collection of base functions is a collection of different vectors/matrix columns or rows which together can be used to represent a signal or image. The basis functions are negatively correlated in many, or all, embodiments of the invention. Negatively correlated basis functions can represent data more efficiently than basis functions that are not negatively correlated, we have found.

We have found that the basis function representations of similar signals or images can be, and often, are, very different from each other and that the basis function representations of similar images can often be easy to differentiate.

Sometimes it can be important to look for changes between images, for example digital scans or X-rays of a body to see if a problem has improved or become worse, or is the same. The invention can find application there because of its ability to differentiate between similar images. It may be necessary to normalise and/or align/register each image as part of the process.

According to another aspect of the invention there is provided a computer-implemented method of recovering individual component signals from a mixed, multi-component, signal comprising:

(i) acquiring a plurality of instantiations of the mixed signal;
(ii) maximising the independence of the components of the recovered component signals;
(iii) ensuring the higher order moments of a demixing matrix W are minimised, W being such that when it operates on the recovered component signals the mixed signals are produced;
(iv) calculating the recovered component signals of the multi-component mixed signal so as to satisfy the constraints of (ii) and (iii).

Embodiments of the invention will now be described by way of example with reference to the accompanying drawings of which: -

**Figures A1 to A3** show three representations of a signal with a phase difference between the representations of the signal;

**Figure B1** shows noise;

**Figure B2** shows a true signal;

**Figure B3** schematically shows a received signal comprising the of true signal of Figure B2 and the noise of Figure B1;

**Figures C1 to C5** show a pixellated image with different spatial phase shifts;

**Figure D1** shows a pixellated image;

**Figure D2** represents the image of figure D1 as a signal with a spatial frequency that varies in the x direction of Figure D1;

**Figure D3** represents the image of Figure D1 as a signal with a spatial frequency in the y direction of Figure D1;

**Figure E1** shows schematically a sensor and microprocessor system in accordance with an aspect of the invention;

**Figure E2** illustrates schematically a variant of the embodiment of **Figure E1;**

**Figure F1** shows another embodiment of the invention;

**Figure G** shows a further embodiment of the invention;

**Figure 1** shows a reduction in noise achieved by aspects of the present invention;

**Figure 2** shows improved image production using an aspect of the invention;

**Figure 3** shows distributions of basis functions;

**Figures 4 and 5** show the comparative performance of one embodiment of the present invention at recovering original signals;

**Figure 6** illustrates a technique for achieving correlation control;

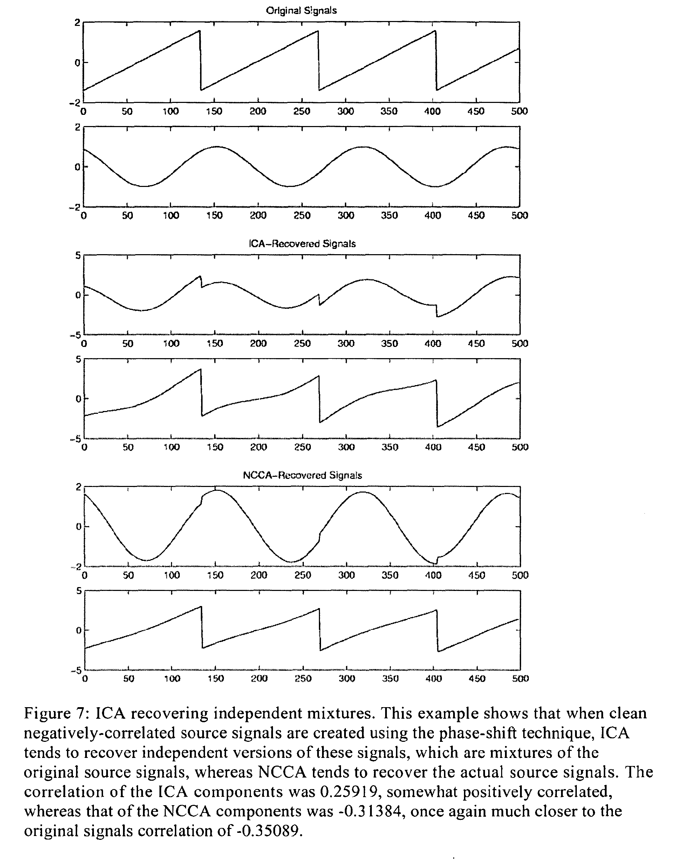

**Figure 7** shows an example of recovering independent signals using an embodiment of the present invention;

**Figure 8** shows correlation as a function of $\lambda$;

**Figures 9 and 10** show embodiments of the invention which use negatively correlated basis functions;

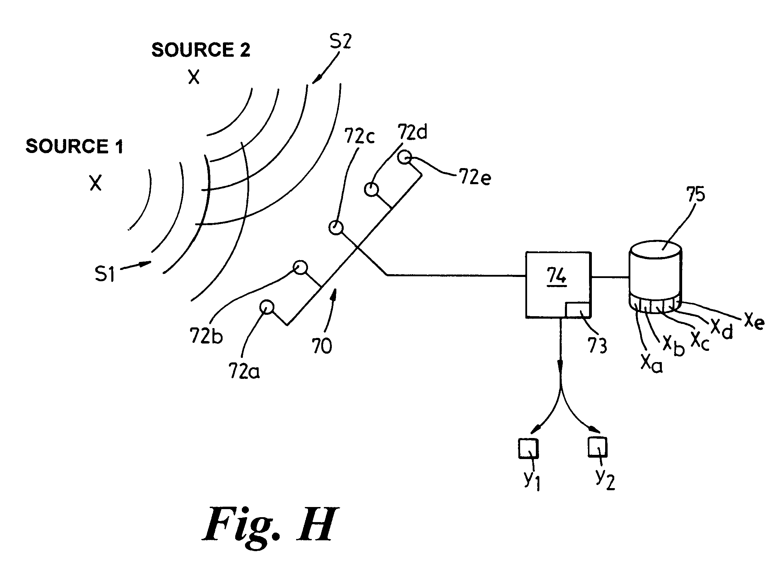

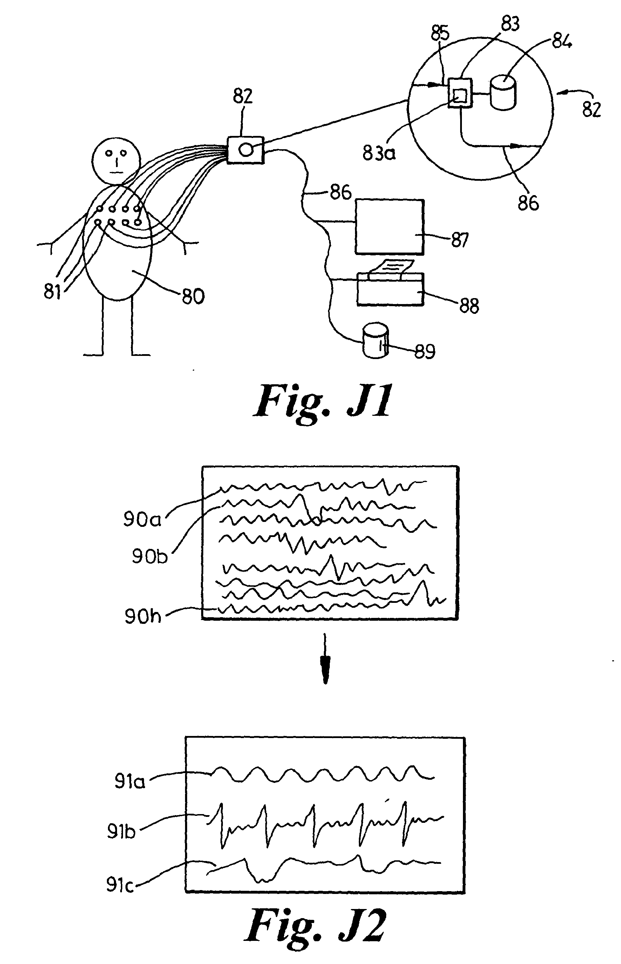

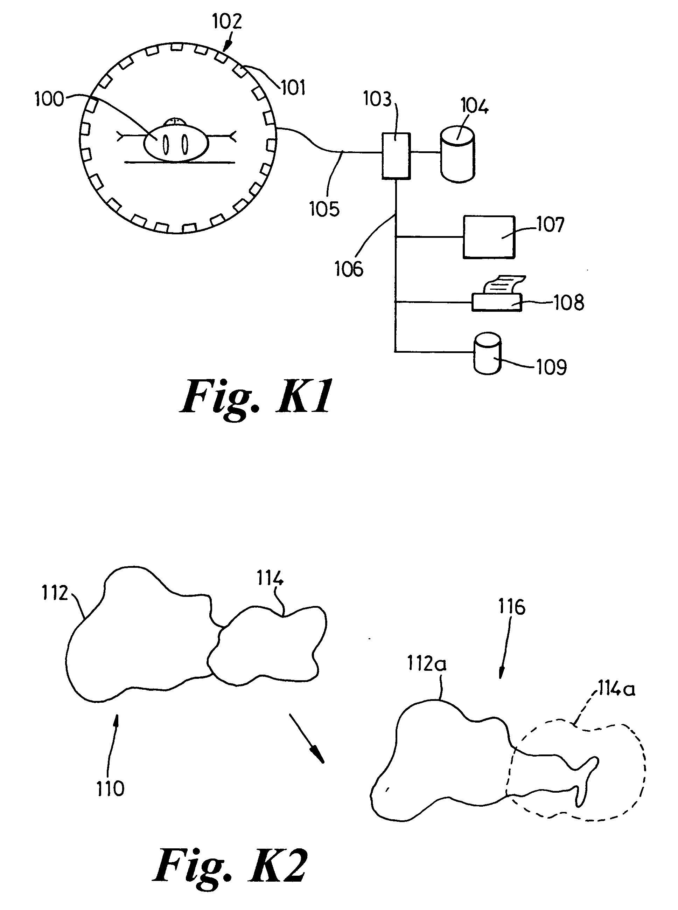

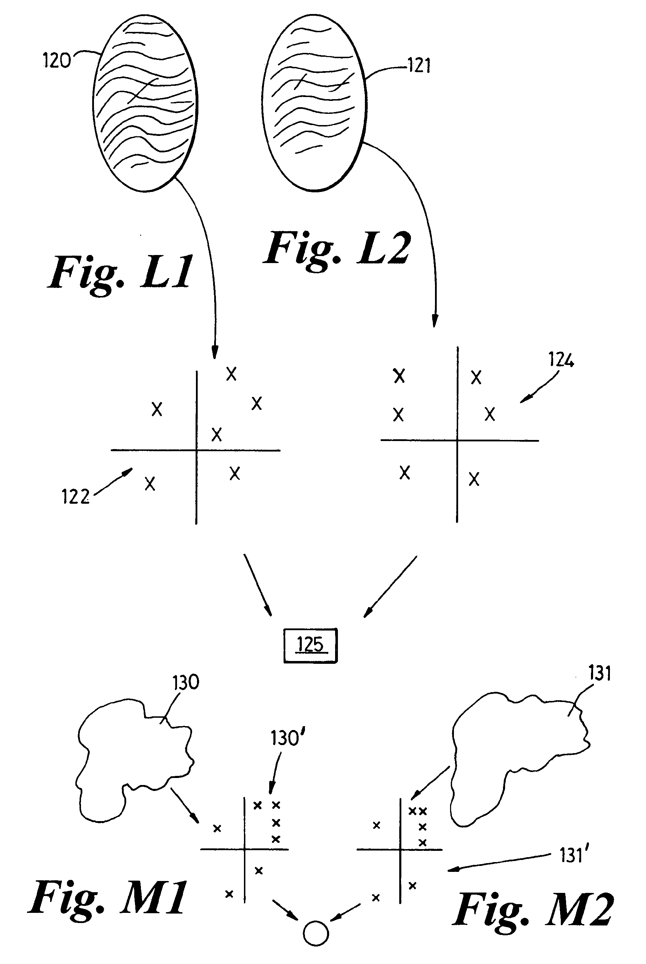

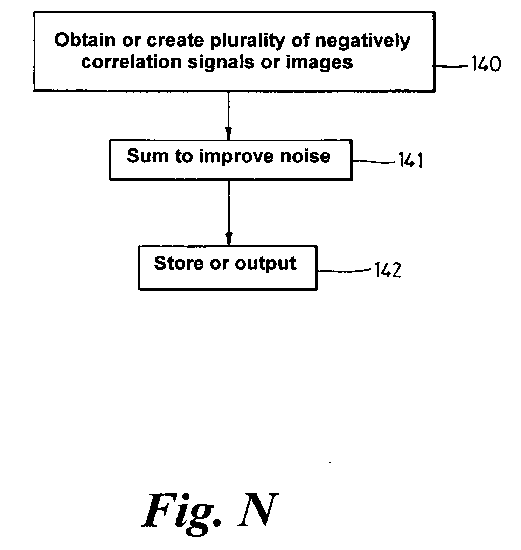

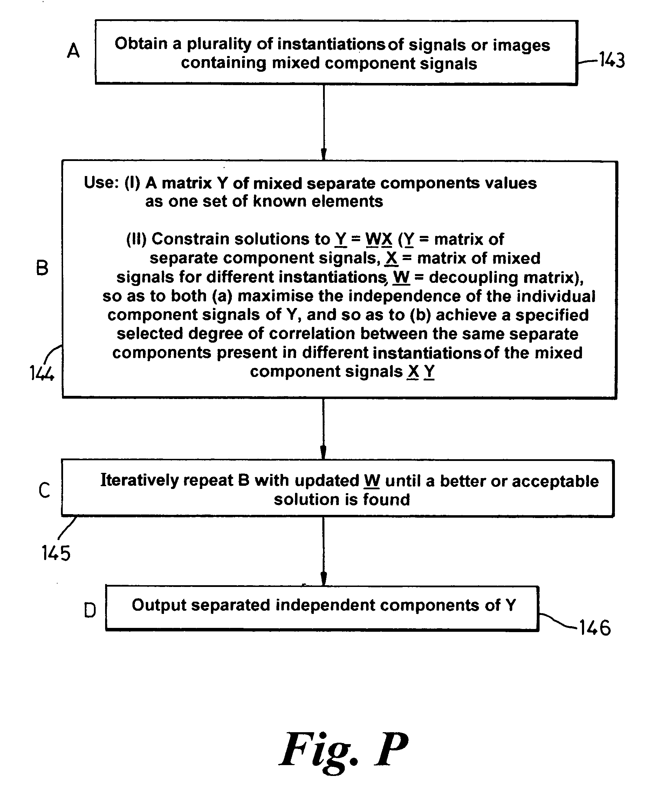

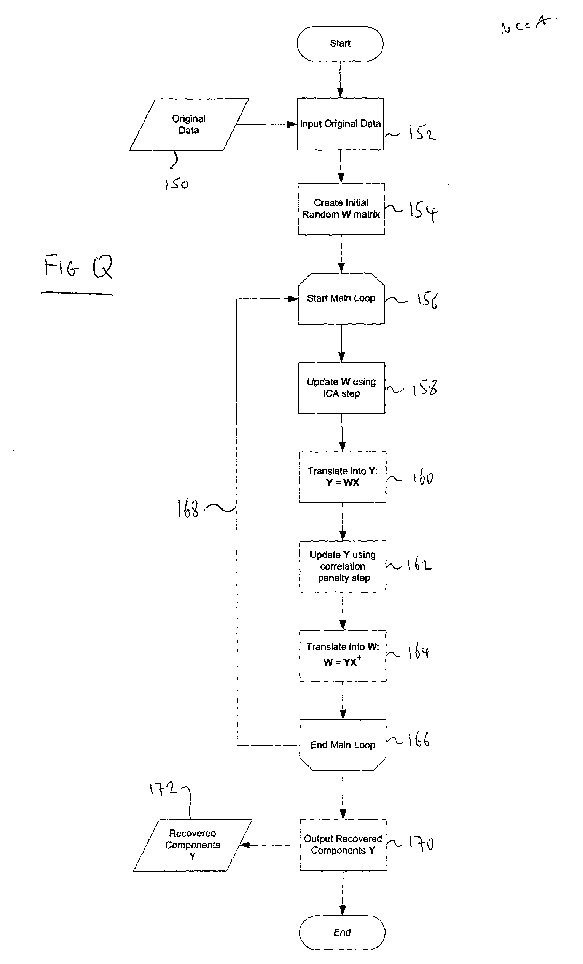

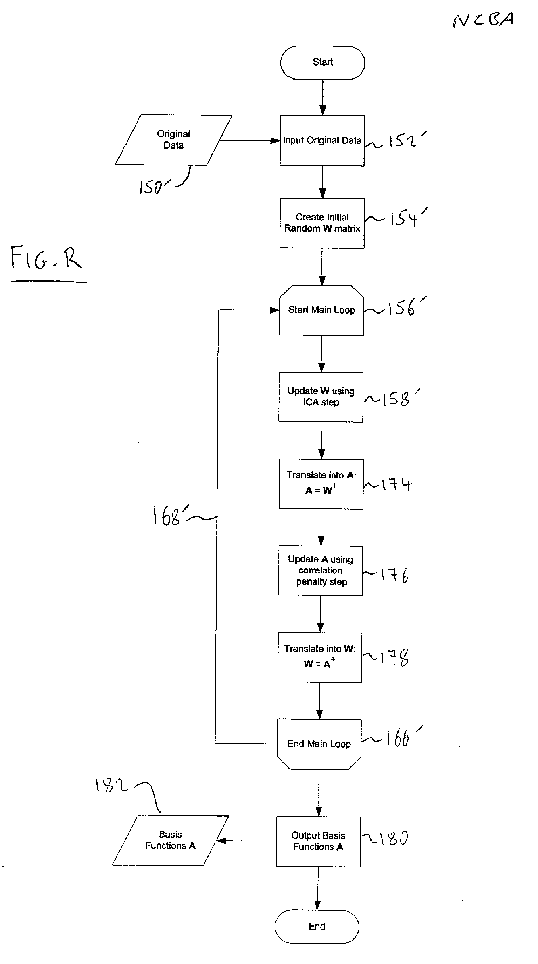

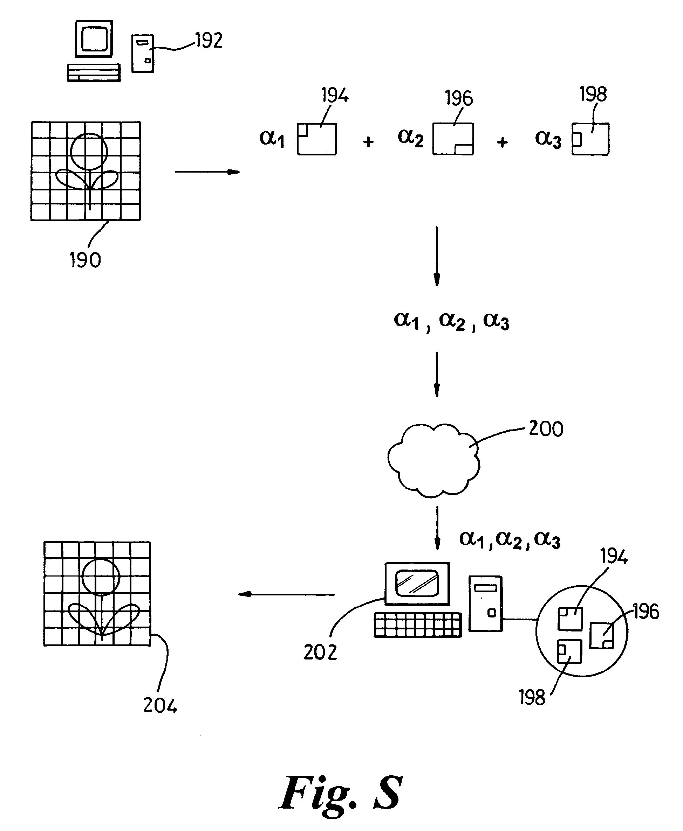

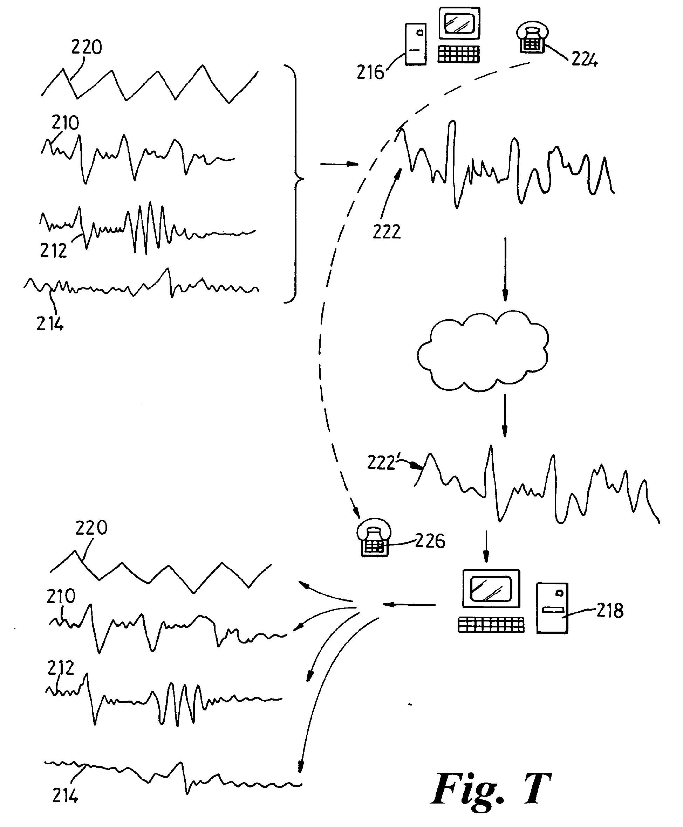

**Figure 11** shows another embodiment of the invention;

**Figures J1 and J2** show an EEG device using the present invention;

**Figures K1 and K2** schematically show an MRI device using the present invention;

**Figures L1 and L2** show schematically finger print matching using the present invention;

**Figures M1 and M2** show schematically monitoring changes in size and/or appearance of an object using the invention;

**Figure N** is a flow chart representing an embodiment of the invention relating to noise reduction;

**Figure P** is a flow chart representing an embodiment of the invention relating to individual signal component analysis;

**Figure Q** is another flow chart representing an embodiment of the invention relating to receiving all of the individual components of a mixed component signal;

**Figure R** is a flow chart representing an embodiment of the invention relating to identified negatively correlated basis functions;

**Figure S** is a schematic representation of a telecommunication application of the invention;

**Figure T** is a schematic representation of another telecommunications application of the invention; and

· **Appendix 1** is a copy of a prior art paper by Aapo Hyvärinen giving a discussion of ICA.

Figure A1 is a graph showing a signal 10 that has an amplitude, shown on the y-axis, that varies with time t, shown on the x-axis. A line 12 is shown to mark a specific point in the signal.

Figure A2 shows the same signal as that of Figure A1, but shifted in phase, as does Figure A3 (a different phase to the signal of both Figs A1 and A2).

It is necessary to be careful about what we call a "signal". In the real world detected signals, detected by sensors, or transmitted to signal processors, or detected in biological systems, are not pure signals as they were created: distortions are present. Sometimes the distortion is noise which, typically, comprises random fluctuations. Sometimes the distortion can be more systematic, such as a bias or a drift in the sensor equipment, or the emitter equipment. A sensor, and most sensors are transducers, can sense a received signal and transduce the received signal into an electrical signal, or an electromagnetic wave, which is typically transmitted to a signal processor. The transducer electronic signal to the processor is also subject to noise and/or more systematic biases. For the subject of this discussion it does not really matter whether we are talking about the sensor not knowing what components of its received signal is true signal and what is distortion, or whether we are talking about the signal processor not knowing what is a true signal from the sensor and what is distortion: there is a "native" signal received that has within it a true, original, signal and an extraneous component, or components, that need to be removed to get at the desired true signal. Figure B1 is a schematic illustration of noise, Figure B2 is a schematic illustration of an original signal, and Figure B3 is a schematic illustration of a received native signal that includes the original signal of Figure B2 and the noise of Figure B1.

Sometimes the received, native, signal can contain two or more real, true signals mixed together (e.g. the sensor detects a native signal that is made of a plurality of true, real signals and noise). The plurality of real, original signals could be the same signal sequence (data) but at different phases, or it could be genuinely different signal sequences (data) with different data contents. For example, a sensor could detect a signal from a radio emitter that has come directly to it, and another that has been reflected, and so has a phase difference relative to the direct signal. Or a sensor could simultaneously detect a first signal from a first emitter mixed with a second signal from a second emitter. The mixed signals need decoupling. It may be desirable to recover them both (or a plurality of signal components - there is no intention to be limited to decoupling/recovering two signals).

The present invention has several aspects: one related to how to improve signal or image quality, one related to how to decouple separate real original signals, and one relating to how to represent data efficiently.

The first aspect, how to improve signal or image quality, exploits our recently acquired new knowledge that if multiple representations of the same native signal (original true signal plus distortion) are negatively correlated with respect to each other and then summed this has the effect of the noise cancelling itself out faster, and move completely, than just summing native signals that are not correlated or that are positively correlated.

Figure E shows a sensor 20, in this example a sensor of electromagnetic waves, such as an infra-red sensor, (but it could sense sound e.g. sonar or ultrasound, or any other electromagnetic wavelength sensor, or a temperature sensor, or pressure sensor - or other form of transducer), and a signal processor 22 with computer memory 24 accessible to it.

A native infra-red signal 26 is acquired by the sensor 20 which converts it to a digitised electrical signal 28 which is transmitted to signal processor 22. Signal processor 22 has running on it signal enhancement software 30, stored in its local memory 32. A further memory 24 accessible by the signal processor 22 may be local memory (e.g. cache memory) or fast-access memory, or even possibly slower-access memory, depending upon how quickly a processed signal is required.

The software 30 uses the digitised native signal 28 to produce copies $28^1$, $28^2$, $28^3$ to $28^x$ in memory 24. Each copy has a phase difference introduced by the software 30. About ten facsimiles of signal 28 are created and stored in the memory 24, each with a different phase difference. The phase-modified facsimiles 28, $28^1$, $28^2$, $28^3$, $28^4$, ... $28^x$ are then added together by the software 30 so as to produce a processed signal 34. Processed signal 34 may be normalised.

Generating a phase difference between the representatives 28 to $28^x$ of the native signal 26/digitised signal 28 has the effect of negatively correlating the representatives with respect to each other. There may be other ways to achieve a negative correlation, but a phase shift is simple to perform and is currently the preferred method.

The noise in signal 28, and the same noise in the negatively correlated versions of signal 28, cancels itself out when the negatively correlated versions are summed. The theory behind this is discussed later. Thus the true, original signal contained within signal 26 and 28 (signal and noise/distortion) can be more accurately extracted.

It will be appreciated that Fig E1, and the above method of summing negatively correlated versions of the same native source signal is schematic and that in practice more sophisticated alternatives exist. For example, there is no need to store the signals 28, $28^1$, $28^2$ etc in memory in full, all at the same time. What is wanted is the value of the sum of the $n^{th}$ time-slice after negative correlation, and this can be obtained, for example by calculating the value of the $n^{th}$ time slice for each phase-shifted version of the signal 28 and summing the slice-values. This could be done serially, for different points in time of the signal 28, and so there may be no need to store all of the data, for all of the versions of phase-shifted signals $28_l$ to $28_n$ simultaneously. This is shown schematically in Figure E2. The processed signal amplitude A processed for time t, is the sum (normalised) of the amplitudes at times $t_2$, $t_3$, $t_4$ etc where $t_2$, $t_3$, $t_4$ are phase shifted with respect to t.

This process can then be repeated for another time t.

The relative shift $\varnothing$ between the multiple representations of the signal 28 may be constant (i.e. they may all be phase shifted with respect to the closest facsimile by the same amount) or there may be different phase shifts between different representations.

In Figure E1 a single signal 26 was detected and negatively correlated versions of it were generated.

Another possibility is to acquire multiple versions of the same signal that are already negatively correlated. Figure F1 shows a signal source 38, a plurality of sensors $40_a$ to $40_f$ (in this example an array of sensors, possibly a linear array), a signal processor 42 and processor - accessible memory 44. Signal processing software 46 resides in fast - access memory 48. Because each of the sensors $40_a$ to $40_f$ are different distances form the source 38 the signals detected by them are at different phases. Previously it has been thought important to remove the phase differences. It is now realised, by us, that if the signals detected by sensors $40_a$ to $40_f$ are summed the noise cancels itself out more completely than if the signals are summed after they have been put back into phase synchronisation.

The phase difference $\varnothing$ between different instantiations does not necessarily have to be the same, however having the same phase difference may optimise the performance.

The sensors will usually have a similar, or the same, phase angle between them (e.g. be linearly spaced equidistantly). If the number of instantiations of the signal is n has a wavelength $\lambda$ we may prefer to arrange for there to be a phase difference of $\dfrac{1}{n}$ of a period between the sensors/instantiations of the native signal, where n is the number of sensors/instantiations. This is believed to optimise performance (n can be the number of instantiations captured). For example the desired/selected negative correlation between examples/instantiations when there are 10 instantiations is about minus 0.1. If all of the instantiations are negatively correlated it may not be possible to achieve an overall negative correlation of more negative than 0.1 as an upper limit. A degree of negative correlation that is more positive than 0.1 (for 10 instantiations) would still work, but be less efficient (e.g. 0.09, or 0.085 would work). For 100 instantiations the optimal negative correlation is minus 0.01. For 1000 instantiations it is minus 0.001. In embodiments when we impose a negative correlation upon the instantiations we know that all instantiations are negatively correlated and the $\dfrac{1}{n}$ optimal approach is very reliable. In some other instantiations where some of the instantiations (e.g. captured signals) might be positively correlated the optimal negative correlation may need to be different (e.g. more negative than $\dfrac{1}{n}$.

We usually choose n to be more than two. It may be 3, 4, 5, 6, 7, 8, 9, 10, or in the range 5-10, 10-15, 15-20, 20 or more.

There are many occasions when sensor/detector arrays are used. The use of negative correlation, either imposed upon a signal, or achieved inherently by different sensors detecting the same original source signal but at different phases, applies to images as well.

In Figure G a digital camera 50 takes a plurality of snap shots 52a to 52n of the same real-world scene. The snapshots are taken closely spaced in time, and in this example are triggered by the user pressing the "take photo" button 54. In this example ten snapshots 52 are taken each 5 ms apart. It is supposed that the scene has not changed significantly in the 50 ms that covers the multiple related snapshots, each of which is a representation of the scene and each of which has some distortion/noise. A microprocessor 56 and associated memory 58 in the camera arrange for the n snapshot images to be negatively correlated and then added to produce a processed image 60.

Figure C1 to C5 and D1 to D3 will help to illustrate one way in which images can be negatively correlated. In Figure C1 a pixellated image 62 is shown. It is desired to create a number of similar negatively correlated images and to scan them to remove/reduce noise. The creation of a negatively correlated image from image 62 is achieved in this example by moving the content of each pixel across to the right by one pixel, to create the image of Figure C2. The image of Figure C3 has been moved to the right, compared with image 62, by two pixels. The image of Figure C4 has been moved down by one pixel compared to the image 62, and Figure C5 has been moved down by 2 pixels.

The movement of the image by a spatial distance to create a related image is a form of negative correlation of the two images. The pixels of images C1 to C5 can be summed to produce an enhanced, processed, image.

It may be better not to translate an image by more than a whole pixel. For example image 62 could be moved up, down, left and right, by one pixel to provide five images to sum.

The image 62 could be rotated, for example a little, in order to give other closely related negatively correlated images.

The image may be spatially phase-shifted (moved) by less than a whole pixel; that is, by a fraction of a pixel. There may be a spatial phase difference of a non-integral number of pixels, which could be more or less than 1 pixel.

Figures D1 to D3 illustrate schematically how spatial pixelated information can be represented as a frequency. Figure D1 shows a pixellated image. Figure D2 shows on the ordinate axis the frequency of colour/pixel grey scale summed for the whole column, and on the abscissa axis the spatial position in the x direction. Figure D3 shows a similar frequency representation, but for the rows extending in the x direction:

the number of occurrences of coloured pixels in each row of Figure D1 along the ordinate axis of the graph of D3, and the spatial position in the y direction of Figure D1 along the abscissa axis of Figure D3.

In this way it can be seen that an image can be represented as a frequency distribution over space, and phase shifts can be used on the frequency distribution so as to ensure negative correlation. It is of course possible to go from the combination of Figures D2 and D3 to Figure D1: they contain the same information.

One embodiment of the invention reduces or substantially eliminates noise by using phase-shifted signals at ½ a period phase shifted (half a period of the frequency of the noise that is to be processed out). Once instance of a noise half-period instantiation of the original signal is added to the original signal. This cancels out noise at that frequency. For example, if it is known that noise occurs at 60Hz we can phase shift by half of that (a 30Hz period) and then sum. Noise at 60Hz will be eliminated or diminished.

We can also add phase-shifted instantiations for other frequencies of noise. For example for 80Hz noise and 90Hz noise we could add a ½ noise period phase-shifted (negatively correlated) instantiations. We can add to the same original signal a plurality of differently phase-shifted instantiations in order to reduce noise at a plurality of different frequencies. If we know the frequency of the signal we can add instantiations that are phase shifted to eliminate or reduce "signals", or noise, at other frequencies, possibly at substantially all other frequencies, in order to suppress the effect on the processed signal of all, or substantially all, or a substantial number of, frequencies except the selected signal frequency. A device which has a selectable variable "signal sought" frequency, turnable to that frequency, is envisaged. This would take a received signal and add instantiations at phase shifts (but not at ½ the signal frequency as a phase shift) in order to reduce the effect of signals at other frequencies.

Alternatively, or additionally, we can, if we know that a system is prone to noise at frequency $f_1$, add a signal instantiation at a half period phase shift to reduce that noise i.e. noise frequency $f_i$ has a $\Pi$ phase shift.

A phase shift of between ¼ and ¾ of a period of noise to be reduced will have a beneficial effect: ½ a period is optimal.

**Decoupling Multi-component Signals**

Another problem solved by some aspects of the invention relates to how to differentiate one selected original signal from a native detected signal that contains multiple signal components (and probably noise or other distortion as well). This can be likened to a cocktail party where there are several conversations occurring simultaneously and it is possible to listen and understand one of them. After one has "tuned in" to that conversation the other sounds/conversations can be filtered out of consciousness - they are still there, but one signal has been distilled out. Problems and similar aims exist with mixed component native signals and with mixed component images. One aspect of the invention provides a way of identifying a component signal in native signal containing a more complex multiple component signal. The effect is achieved by processing the native signal that contains the multiple component signals with an appropriate basis function which assumes a degree of negative correlation between the component signals in order to separate them.

Another example of an area of application of the invention is to transmit a signal, for example an image, or series of images (e.g. a video stream) from one place to another. Instead of transmitting a value for each pixel of an image once a frame (which can be a lot of data), we can convert a signal (e.g. video image/frame) into a weighted set of negatively correlated basis functions and transmit the weighting coefficient of the negatively correlated basis functions, the receiver also knowing what the basis functions are and so being able to reconstitute the frame/image/signal using the transmitted weightings. This reduces data traffic. Negatively correlated basis functions minimise the number of basis functions necessary, and thereby minimise the number of weighting coefficients that are transmitted.

In other embodiment, using the fact that we can discover all components of a multi-component signal using CCA we can include in a multi-component signal a reference signal of known content and make use of that known signal. We can then establish what $\lambda(f(W))$ is necessary to recover the known reference signal as one of the components and, using that $\lambda(f(W))$, we recover all of the other independent components as well. This can allow us to multiplex independent signal components over each other in the same time and use the reference component signal as a key to recover all of the other unknown signals. Systems, apparatus, and software for doing this are envisaged.

It will be appreciated that if we know the degree of correlation we can recover mixed signals from a multi-component signal. We could mix signals with an unknown degree of correlation and use that known degree of correlation to recover them. This may give some encryption capability (e.g. we could telephone or fax the degree of correlation to someone and e-mail the mixed signal data).

If we know one signal we can use that to determine its degree of negative correlation, and hence recover other signals.

## Choosing Basis Functions

Another aspect of the invention is related to how to create/select the appropriate basis functions necessary to achieve the filtering of multi-component signals into separate consistent component signals and/or to represent a signal. The choice of basis functions can also represent signals/data using fewer basis functions, and hence data represented by the basis functions can be stored, processed, or telecommunicated more efficiently.

It will be helpful at this point to discuss the details of some new and useful algorithms intended to be used to exploit the benefits of negative correlation in the real physical world. These algorithms give superior performance in some circumstances (e.g. where negative correlation exists) and allow us to realise significant technical benefits, for example using less processing power, less telecommunications bandwidth, and less memory in computer systems.

We have discovered and realised that negative correlation has clear statistical benefits for noise reduction, and also in relation to representing data. We aim to provide correlated component analysis (CCA) which can be used to analyse a signal and extract/identify signal components. Sometimes this will be negatively correlated component analysis (NCCA).

We also aim to provide correlated basis analysis which aims to identify suitable basis to represent data, e.g. for use in CCA, and to identify suitable basis to represent data in a manner which allows efficient processing and storage. Sometimes the bases will be negatively correlated (NCBA).

Before discussing our new algorithms the reader is asked to familiarise themselves with ICA: Independent Component Analysis. A suitable primer on this subject is reference [1] listed in the references at the end. The reader is directed to read that now. The contents of reference 1 are hereby incorporated by reference. Also attached as part of this patent application is a paper by A Hyvärinen et al discussing ICA at an overview level. ICA software can be downloaded from the website http://www.cis.hut.fi/projects/ica/fastica/code/dlcode.html (as least at the date of filing it can).

Independent Component Analysis has been known for about 10 years at the priority date of this patent. ICA has had a number of applications in neuroscience, most notably in cases of blind source separation, and in models which relate natural image statistics to the properties of the early visual system [reference 2, 3].

In ICA, components are by definition assumed to be statistically independent, that is:-

$$\mathrm{E}\{g(x)h(y)\} \;=\; \mathrm{E}\{g(x)\}\mathrm{E}\{h(y)\} \qquad\qquad (1)$$

In this equation

x is a random variable
y is another random variable
g (x) is a function of x
h (y) is a function of y
And E is the expectation of the random variable.

This also means that components must be uncorrelated, since this is a weaker condition subsumed by independence, where h(x) and g(x) are simply identity functions:-

$$\mathrm{E}\{xy\} \;=\; \mathrm{E}\{x\}\mathrm{E}\{y\} \qquad\qquad (2)$$

Whilst this can be a useful working assumption, we have determined that independence is often statistically not the optimal condition for a set of variables. In particular, we believe that negatively-correlated variables have some properties which make them preferable to positively-correlated and independent variables, especially in cases of noisy systems where negative correlation can help reduce the noise and increase the storage capacity (space filling) of a computer memory.

**1.2 Benefits of Negative Correlation**

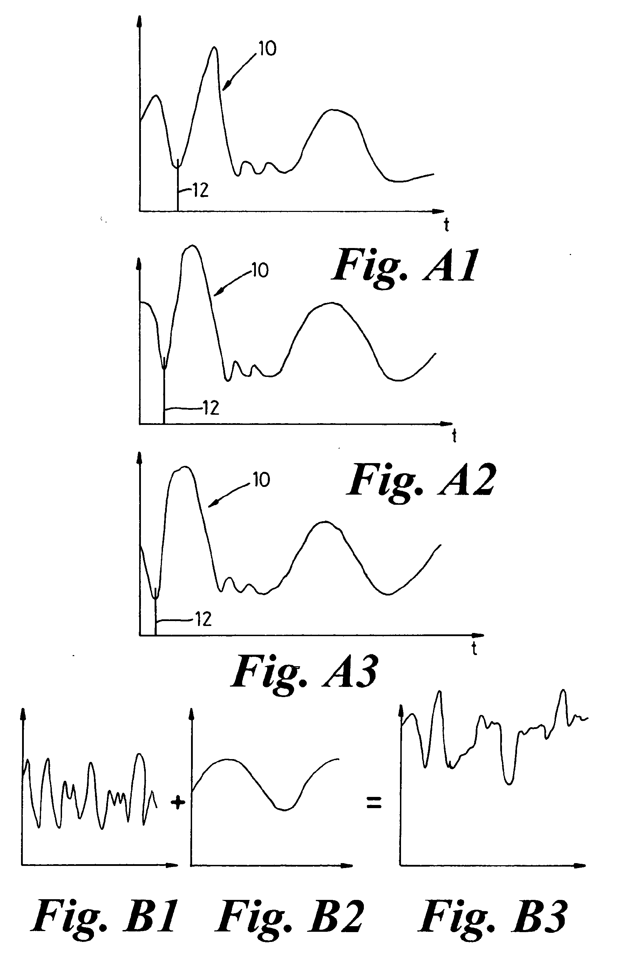

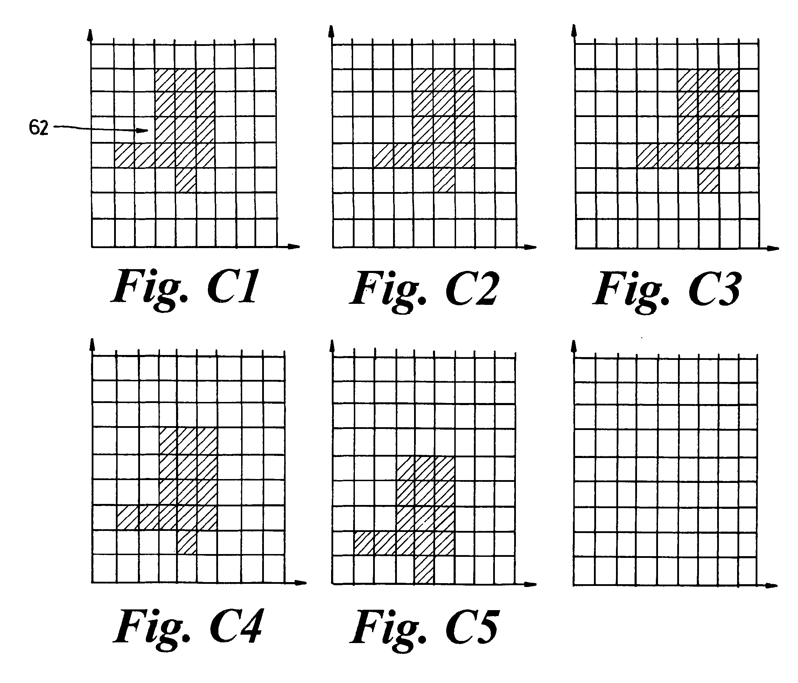

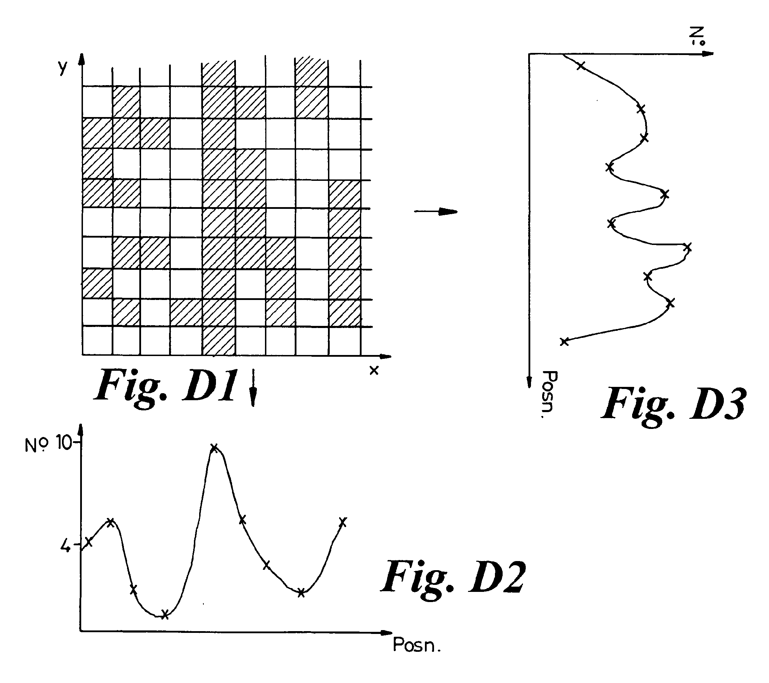

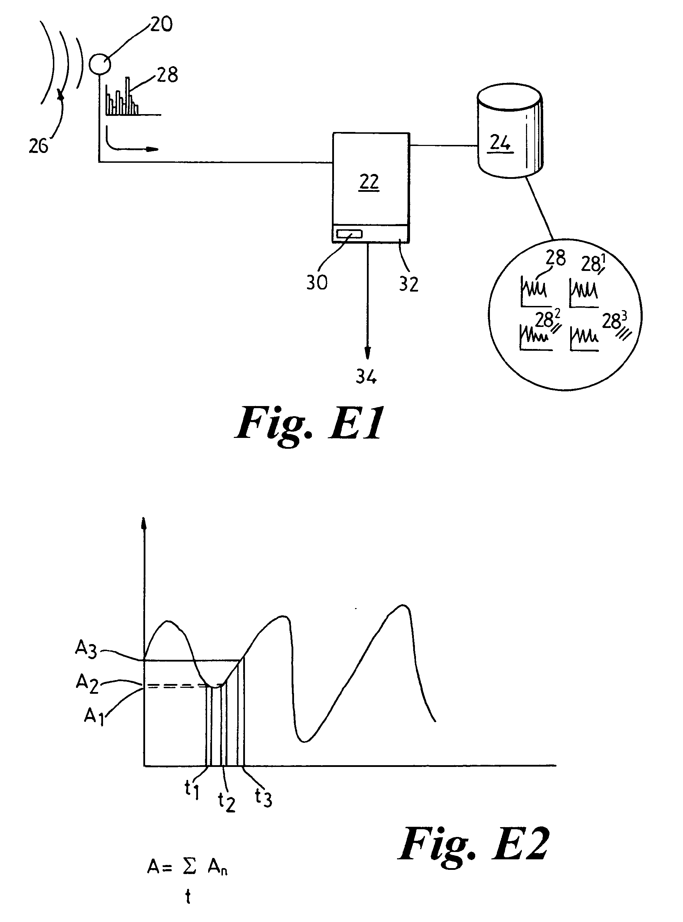

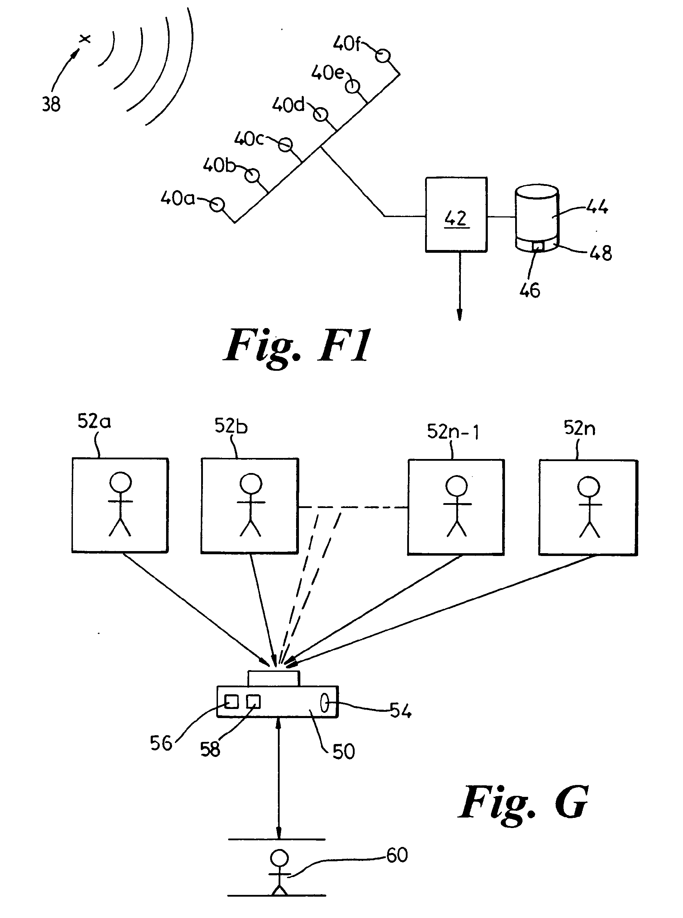

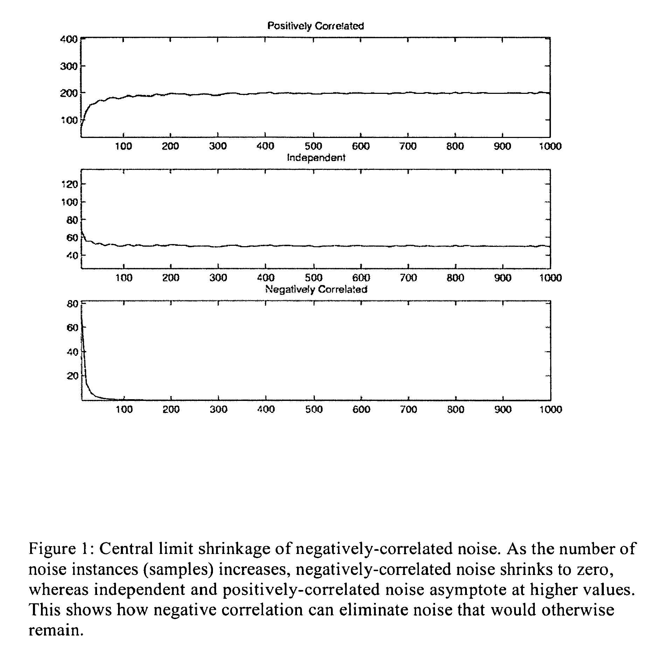

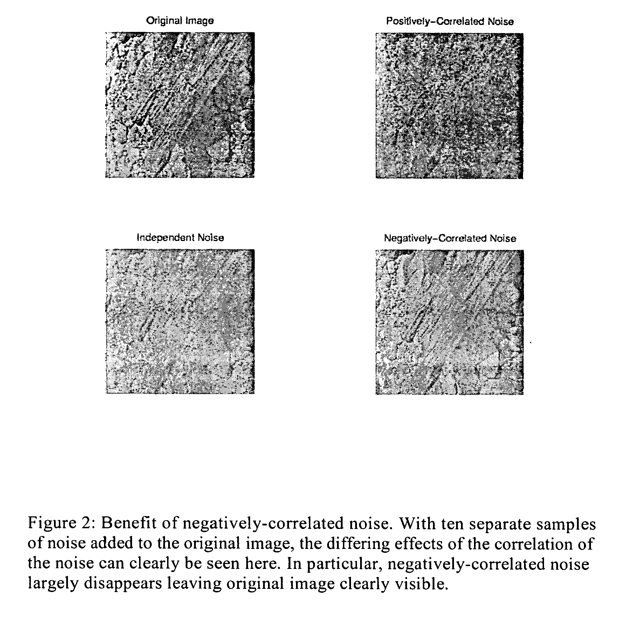

Two useful and newly appreciated specific benefits of negative correlation are demonstrated here. The first, shown in Figure 1, is that negatively-correlated gaussian noise will tend to reduce to zero as the number of instances of this noise increase. By contrast, both positively-correlated and independent gaussian noise asymptote at higher, non-zero values with increasing instances. The utility of this result is shown in Figure 2, where gaussian noise is added to a number of replications of the same image. Where the noise is positively-correlated the image is almost completely obscured. Independent noise also results in an image in which the detail has been completely lost to the noise. Only when the noise (of the same strength as the previous two cases) is negatively-correlated, does the image emerge, as the noise effectively cancels itself out.

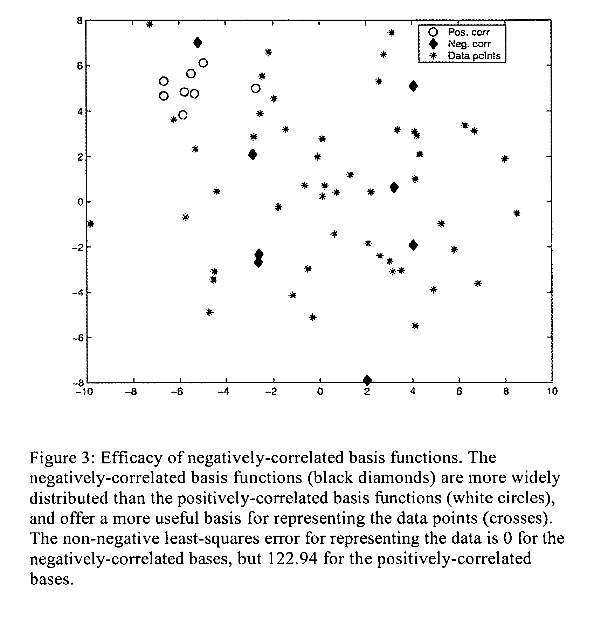

The second benefit of negatively-correlated variables is their ability to fill a space better than positively-correlated or independent variables, because of their tendency to push each other away. Figure 3 shows a collection of data, some positively-correlated elements, which will be called basis functions, some independent basis functions, and some negatively-correlated basis functions. (Basis functions are known to skilled men in the field of ICA and are vectors which when multiplied by appropriate multipliers (a matrix) can represent data or a signal (e.g. an image)). It is immediately obvious from Figure 3 that the negatively-correlated basis functions are more evenly distributed throughout the data space than the independent basis functions, which in turn are more evenly distributed than the positively-correlated basis functions. The specific benefit of this space-filling is that when the data needs to be expressed in terms of the basis functions (as is the case in a typical linear model, including the ICA model), then the residual error is minimised when the basis functions are negatively correlated, and maximised when they are positively correlated, provided that the coefficients are restricted to non-negative values. The need for this restriction arises because where basis functions are negatively-correlated with each other, by definition the most negatively-correlated function for basis function **a,** will be simply **-a.** It is clear from this that if coefficients to basis function **a** are allowed to take negative values, then there is no meaningful distinction between **a** and **-a** in the model, which effectively means that whenever **a** is present, **-a** is also implied as present. This means that a set of independent components will best cover the space under these circumstances, with their implied negatively-correlated components also being present; actual positively- or negatively-correlated basis functions under these circumstances will be to some extent redundant and suboptimal. However, where only non-negative coefficients are allowed, basis function **a** no longer implies **-a** as well, meaning that there is now a benefit to having real negatively-correlated basis functions, as this implies **-a** are no longer present. This non-negative coefficient restriction is increasingly popular in more recent work [4, 5] for other, principled, reasons, such as the fact that natural quantities cannot be negative, images cannot consist of negative amounts of constituent objects, neural firing rates cannot be negative etc., and so the non-negative constraint should not be regarded as a weakness of the existing approach.

We have wondered if, given these benefits that we now see to negative correlation, evolved systems would exploit and use negative correlation of signals. Recently, is has been shown that negative correlation between neural firing of different neurons in the brain leads to a decrease in the noise of the signal, which therefore offers enhanced performance in a stochastic system [6]. We have also found evidence confirming the existence of this negative correlation in *in vivo* experiments on the rat's olfactory bulb. Thus if computers are to be made more efficient it is, we believe, possible to use similar data and signal processing and storage techniques in computer processors. Organic brains are remarkably efficient at processing and saving data, and we believe that it is at least in part because of the use of negative correlation processes.

1.3 Two different approaches for negative correlation and ICA

In the basic ICA model, **X** = **AS,** where **X** = the detected signals **S** = the components of multi-component signals, and **A** = the mixing matrix for mixing the component signals S to result in the detected signals **X**. The equation **X** = **AS** therefore has two quite different sets of variables to estimate: the components themselves, which form the matrix **S**, and the basis functions, which together form the mixing matrix **A**. Both of these are candidates for negative correlation, and as such two complementary algorithms, negatively-correlated component analysis (NCCA) and negatively-correlated basis analysis (NCBA), have been developed and are presented in this patent specification.

The next section will outline the theoretical framework for NCCA and NCBA, show the basic steps in the implementation of it, and highlight the benefits of the specific approach taken here. Following that is a section containing some simple examples demonstrating NCCA's ability to recover negatively-correlated components, and then a section showing examples of how NCBA takes full advantage of the benefits of negative correlation.

2 Algorithm

2.1 General Form

Both our new NCCA and NCBA techniques use the same fundamental approach, which is to have an ICA core to find a set of components or basis functions, along with a lagrangian penalty term to encourage those components or basis functions to be negatively correlated. We therefore start with the basic ICA model:-

$$\mathbf{x} \;=\; \mathbf{As} \qquad\qquad (3)$$

$$\mathbf{y} \;=\; \mathbf{Wx} \qquad\qquad (4)$$

(**x** are the mixed components, **A** is the mixing matrix, **S** are the original source components, **y** are the recovered source components, **W** is the demixing matrix.)

We can find either negatively-correlated components or negatively correlated basis functions by maximising independence, as under ICA, with an additional constraint to minimise the correlations (maximise the negative of the correlations) of the recovered components or basis functions using the technique of Lagrange multipliers.

The difference between the marginal distributions $f_{y_i}(y_i \, W)$ and the joint distribution $fy(y, W)$ of the independent components y, can be expressed as the difference between the marginal differential entropies $\sum\limits_{i}^{m} H(y_i)$ and the joint differential entropy $H(y)$ of these components. This in turn can be given by the Kullback-Leibler (K-L) divergence:-

$$D_{f\|\tilde{f}}(\mathbf{W}) \;=\; \sum_{i}^{m} H(y_i) - H(\mathbf{y}) \qquad\qquad (5)$$

$$H(\mathbf{y}) \;=\; \underset{m}{H(\mathbf{Wx})} = H(\mathbf{x}) + \log \mid \det(\mathbf{W}) \mid \qquad\qquad (6)$$

$$\Rightarrow D_{f\|\tilde{f}}(\mathbf{W}) \;=\; \sum_{i} H(y_i) - H(\mathbf{x}) - \log \mid \det(\mathbf{W}) \mid \qquad\qquad (7)$$

The correlation penalty term, including the different versions for the two different algorithms, will be outlined in the next section. For now, it will be represented by the lagrangian placeholder function F(W), and the standard lagrangian coefficient, λ. This gives us the correlation penalty term:-

$$\lambda(F(\mathbf{W})) \qquad\qquad (8)$$

This can be added to the K-L divergence to give a complete objective function to be minimised:-

$$D_{f\|\hat{f}}(\mathbf{W}) \;=\; \sum_i^m H(y_i) - H(\mathbf{x}) - \log|\det(\mathbf{W})| + \lambda(F(\mathbf{W})) \qquad (9)$$

It can be important to note that in an algorithmic implementation, this function is equivalent to the following two-step procedure:

$$\bar{D}_{f\|\hat{f}}(\mathbf{W}) \;=\; \sum_i^m H(y_i) - H(\mathbf{x}) - \log|\det(\mathbf{W})| \qquad (10)$$

$$D_{f\|\hat{f}}(\mathbf{W}) \;=\; \bar{D}_{f\|\hat{f}}(\mathbf{W}) + \lambda(F(\mathbf{W})) \qquad (11)$$

This means that the standard K-L divergence function can be calculated in the first step, and the negative correlation penalty term can be applied in the second step, without the optimisation technique employed for both steps having to be the same. The result of this is that existing algorithms for the ICA core can be imported without any significant modification for the first step, and a simple gradient approach used to reduce the correlation between the derived components or basis functions for the second step.

The activation functions forming the update steps in an iterative algorithm for the two equations above can be formed by taking the gradient of the objective function with respect to the demixing matrix **W**. For the various terms in the equations, this gradient is computed as follows:-

$\sum_i^m H(y_i)$ The marginal distributions are the most problematic, as the formation of the gradient requires a parametric estimation of the distributions. This can be achieved with reasonable accuracy using the Gram-Charlier expansion.

However, ICA algorithms typically take advantage of a computationally much simpler approximation, where the objective function is simply given by an appropriate nonquadratic function. The most popular specific choice is log (cosh (**Wx**)), which yields xtanh(Wx) as the derivative term; more generally, the derivative is x φ **(Wx).**

H(x) The first of the two terms which together make up the joint distribution is a function only of the mixture variables x, which means that this term is a constant, not dependent on **W**. It thus drops out of the gradient altogether.

log | det(**W**) | The second of the joint distribution terms clearly is dependent on **W**. Some fixed-point ICA algorithms also drop this term, by pre-whitening the data (thus assuming zero correlation), which results in this term also being a constant. However, this is clearly not appropriate for negatively-correlated component analysis, and so the gradient of this term must be included. This is given by $\mathbf{W}^{-T}$ (the inverse transpose of the demixing matrix).

λ (F(**W**)) The abstract form of the correlation penalty term has a similarly abstract gradient: λdF(**W**)/d**W**. The detailed form of these functions is outline the next section.

Putting these gradient terms together, we have the complete gradient activation functions to be used in the iterative algorithm:-

$$\frac{d\bar{D}_{f\|\hat{f}}(\mathbf{W})}{d\mathbf{W}} \;=\; \mathbf{x}\varphi(\mathbf{Wx}) - \mathbf{W}^{-T} \qquad (12)$$

$$\frac{d\bar{D}_{f\|\hat{f}}(\mathbf{W})}{d\mathbf{W}} \;=\; \frac{dD_{f\|\hat{f}}(\mathbf{W})}{d\mathbf{W}} + \lambda\frac{dF(\mathbf{W})}{d\mathbf{W}} \qquad (13)$$

This finally gives us iterative update steps for estimating the demixing matrix W based on maximising the negative gradient:-

$$\Delta \bar{\mathbf{W}} \;=\; \eta[\mathbf{W}^{-T} - \mathbf{x}\varphi(\mathbf{W}\mathbf{x})] \tag{14}$$

$$\Delta \mathbf{W} \;=\; \Delta \bar{\mathbf{W}} - \lambda \frac{dF(\mathbf{W})}{d\mathbf{W}} \tag{15}$$

These provide the central weight update steps in the most general form. Specific implementation involved the use of a chosen existing ICA technique for the first update step; several have been tested for use with the algorithms presented here, including a simple generic gradient method developed for testing these algorithms, the Bell-Sejnowski algorithm [7], Amari's natural gradient version of the Bell-Sejnowski algorithm [8], and Hyvärinen's FastICA algorithm [9], with the important caveat that the orthogonalisation step in a whitened domain must be removed (in order to allow components to be correlated at all), when the implementation and testing of the algorithms is described in more detail.
Specific implementation of the second update step involves a choice of negative correlation penalty function F(W), and a method for optimising this function with respect to W. This is the subject of the next section.

2.2 Negative Correlation Penalty Function

In order to encourage the derived signal components or the basis functions to be negatively correlated, it is necessary to minimise a function which measures the correlation between the components. As correlation is represented by the correlation matrix, minimisation of this matrix is the first sight choice. However, the function is not quite as straightforward as this, because the correlation matrix is a matrix of variables, and the gradient of this is a third-order (three-dimensional) matrix, whereas what is actually needed for the update steps is a vector-values function of variables (which is in practice a matrix where the variables are represented by a vector of samples; this gives us a matrix to update either **A** or **S** in the ICA model, depending on which algorithm we are using). The reason for this discrepancy is that the correlation matrix really represents a matrix of separate correlation measures, rather than the single correlation measure that we need to minimise. The solution for this is to actually sum the elements of the correlation matrix. Hence for variables a, (in practice represented by matrix of samples **A**), the elements of the correlation matrix $\mathbf{aa}^T$ are summed together. This provides the function which can be minimised with respect to each of the variables in a, giving a vector-valued function which minimised the overall correlation of **a**. A simple two variable example is given as follows:-

$$\mathbf{a} \;=\; \begin{bmatrix} a_1 \\ a_2 \end{bmatrix} \tag{16}$$

$$\mathbf{aa}^T \;=\; \begin{bmatrix} a_1 a_1 & a_1 a_2 \\ a_2 a_1 & a_2 a_2 \end{bmatrix} \tag{17}$$

$$F(\mathbf{a}) = \sum \mathbf{aa}^T \;=\; a_1 a_1 + a_1 a_2 + a_2 a_1 + a_2 a_2 \tag{18}$$

$$\frac{dF(\mathbf{a})}{\mathbf{a}} \;=\; \begin{bmatrix} a_1 + 2a_2 \\ a_2 + 2a_1 \end{bmatrix} \tag{19}$$

This gives us a vector (in practice a sample matrix) which can be used as the lagrangian penalty term, and results in the derived variables being more negatively correlated than would otherwise be the case. This gradient approach is completely stable given an appropriate learning rate, in common with other simple gradient algorithms. In the general case, the result is as follows:-

$$\mathbf{a} \;=\; \begin{bmatrix} a_1 \\ a_2 \\ \vdots \\ a_i \end{bmatrix} \tag{20}$$

$$\mathbf{a}\mathbf{a}^T \;=\; \begin{bmatrix} a_1 a_1 & a_1 a_2 & \ldots & a_1 a_i \\ a_2 a_1 & a_2 a_2 & \ldots & a_2 a_i \\ \vdots & \vdots & \ddots & \vdots \\ a_i a_1 & a_i a_2 & \ldots & a_i a_i \end{bmatrix} \tag{21}$$

$$F(\mathbf{a}) = \sum \mathbf{a}\mathbf{a}^T \;=\; a_1 a_1 + a_1 a_2 + a_2 a_1 + \ldots + a_i a_i \tag{22}$$

$$\frac{dF(\mathbf{a})}{\mathbf{a}} \;=\; \begin{bmatrix} 2\sum a_i \\ 2\sum a_i \\ \vdots \\ 2\sum a_i \end{bmatrix} - \mathbf{a} \tag{23}$$

This general gradient algorithm for reducing the correlation between a set of variables is used in both CBA and CCA (or NCBA and NCCA, subclasses of CBA and CCA). For CBA, the variables whose correlation is to be minimised are the set of basis functions, which are the columns of the mixing matrix $\mathbf{A}$, which therefore means $\mathbf{A}^T$ gives the sampled variables in rows to be used in the above formulae. For CCA, the components which are the rows of S are the variables for use.

One further trick is required in many embodiments in order to employ this gradient approach as the second step in our CBA and CCA algorithms. These algorithms, as seen in the earlier equations, require the update steps to be for the separating matrix $\mathbf{W}$ (although in practice, some ICA algorithms use the mixing matrix $\mathbf{A}$ in their update step). We therefore need to be able to give the negative correlation step update matrix, expressed above in terms of either $\mathbf{A}^T$ for CBA or $\mathbf{S}$ for CCA, in terms of $\mathbf{W}$. To do this we can employ another trick, noting the fact that the least-squares error inverse for a non-square matrix $\mathbf{A}^T$ is given by the Moore-Penrose pseudoinverse, $(\mathbf{A}^T)^+$. This therefore gives us the best estimate of $\mathbf{W}$ to be used directly in the update step, and has the added benefit of being simple and relatively efficient to calculate. Conversely, in order to first enter the $\mathbf{A}$ domain in order to calculate the gradient update step, the pseuodinverse can be used in the other direction, on the $\mathbf{W}$ separating matrix yielded by the first update step. We thus have a translation from $\mathbf{W}$ into $\mathbf{A}$ for the gradient update step, and then back again into $\mathbf{W}$ to yield the final updated $\mathbf{W}$ matrix for the current iterative pass. It should be noted that it is not possible to perform the gradient update directly in the $\mathbf{W}$ domain because minimising the correlation of $\mathbf{A}^T$ is equivalent to maximising the correlation of $\mathbf{W}$ which is unstable because the fixed point of perfect correlation does not invert to perfect negative correlation back in the $\mathbf{A}$ domain.

For the CCA algorithm, the update translation operations are slightly different. Given the $\mathbf{W}$ matrix from the first update step, the components $\mathbf{S}$ can be easily calculated by noting that $\mathbf{S} = \mathbf{W}\mathbf{X}$. Once the negative correlation update has been calculated in the $\mathbf{S}$ domain, the conversion back to the $\mathbf{W}$ domain is given by another simple calculation: $\mathbf{W} = \mathbf{S}\mathbf{X}^+$. It should be noted that where $\mathbf{S}$ is constrained to be non-negative, which is not the inherently the case for (N)CCA as it is for (N)CBA but may be adopted for some purposes nonetheless, the calculation of $\mathbf{S}$ is more complex, and typically found using a constrained optimisation technique, which will generally be much slower than the methods given here.

2.3 Benefits of the Current Approach

By adopting a two-step update procedure, where the separating matrix is first calculated using an ICA update step, and then the resultant components or basis functions are made more negatively correlated using the new gradient step given in the previous section, there are a number of particular benefits:-

- The two update steps do not need to use the same, gradient-based optimisation procedure. This is especially important as the negative correlation gradient algorithm is not stable in the **W** domain in which ICA update steps typically operate.

- By having the ICA update step separately, existing ICA update steps can be used with almost no modification required. The existing algorithms do not even have to use a gradient optimisation approach to be usable; multiplicative or quadratic programming algorithms can also be used.
  The only constraint on ICA algorithm is that it must not contain an orthogonalisation step (so the Fast ICA algorithm is excluded or at least has to have that step removed, which can make it unstable for large problems). This is obviously necessary in order to allow components to be any other than uncorrelated.

- By translating into the **A** domain for (N)CBA and the **S** domain for (N)CCA where necessary, the ICA step can operate in either the **A** or the **W** domain, and still be compatible with these algorithms.

- Existing ICA algorithms do not need to estimate the components **S** in order to be used with these algorithms, although obviously ones that do are also compatible.

- By using a separate negative correlation update step, the effect of the negative correlation penalty term is both easy to assess, and easy to control through the strength of the parameter $\lambda$.

- The separate negative correlation update step ensures the stability of the algorithm, as the stability of existing ICA steps is not altered within the first update step, and the second update step also has guaranteed stability for a sufficiently low learning rate.

It can be seen that the current algorithms are an extension of, and in a real sense a generalisation of, ICA, combining the benefits of existing ICA algorithms with the benefits of negative correlation. The following two sections give some brief demonstrations of how these combined benefits allow these two new algorithms to outperform ICA.

3 Examples of (N)CCA

The examples in this section show the (N)CCA algorithm in operation. As (N)CCA is designed to find negatively-correlated components, the demonstrations here focus on its ability to accurately recover source signals that are negatively-correlated. Its performance is contrasted with that of ICA on the same tasks.

3.1 Example 1: Basic performance

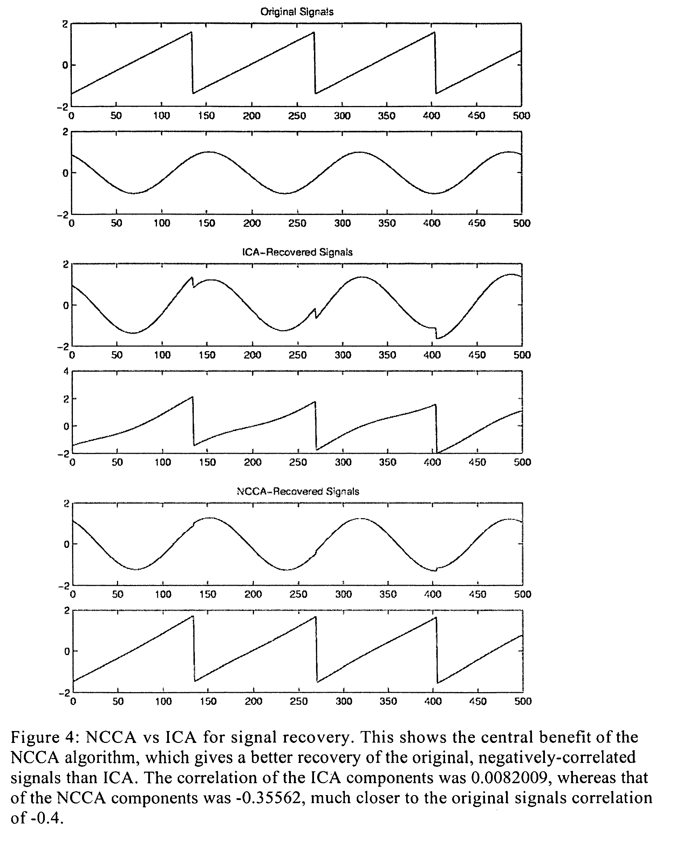

The first example (Figure 4) clearly demonstrates the most important feature of (N)CCA - its superior ability to recover the original, negatively-correlated signals. While ICA has recovered signals that remain quite significantly mixed, and are not the original source signals, NCCA has successfully recovered the original, negatively-correlated source signals to a much greater extent.

3.2 Example 2: ICA recovers original independent signals, (N)CCA recovers negatively-correlated source signals

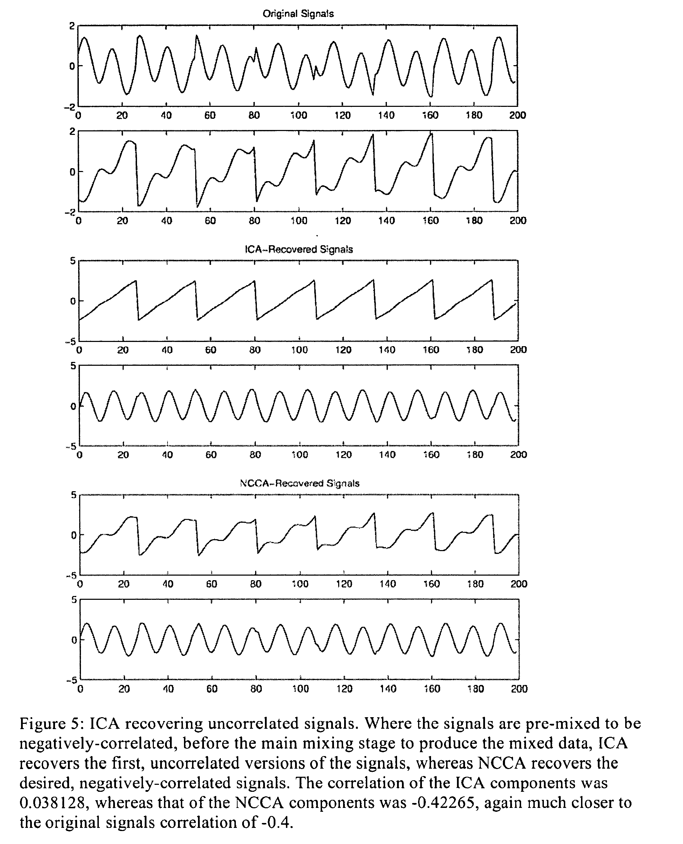

The example here (Figure 5) visibly demonstrates the difference between the independence goal of ICA and the negatively-correlated components goal of NCCA. The negatively-correlated source signals are recovered by NCCA, whilst ICA recovers independent signals. The signals recovered by ICA are actually closely related to those from NCCA, and can be explained in terms of the method used for generating the source signals. This was a standard technique of starting with independent source signals (such as a sine wave and a sawtooth function for the two-component example), and pre-mixing them with a negative correlation matrix to establish the original source signals for the algorithms to recover. After this, the pre-mixed source signals are mixed together with the mixing matrix to produce the mixed data. Because both mixing and pre-mixing are linear operations, they can in fact be described by just a single mixing operation, as though the original independent signals were mixed together just once to produce the mixed data. Because of this, it is not surprising that ICA finds this combined mixing matrix and original independent source signals. It is important to note that this does not at all invalidate this test; on the contrary, it points to a specific weakness in this ICA algorithm when faced with correlated signals (which it is not designed for). It is desirable however, also to test the algorithms without this pre-mixing stage leading to this phenomenon. This is addressed in the next section.

3.3 Two methods for generating negatively-correlated test signals

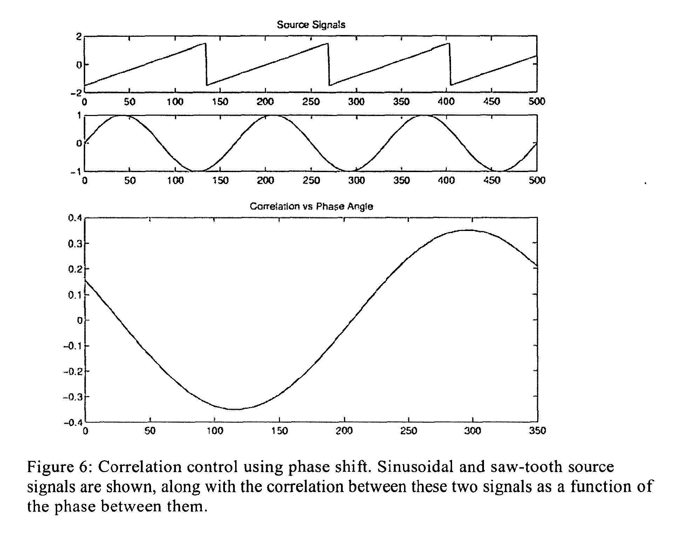

The most common method for generating negatively-correlated test signals is to first generate independent signals, and then to pre-mix them with a negative correlation matrix. An advantage of this method is that it allows easy and precise control of the correlation relationship between any number of components. However, it was seen in the previous example that under these circumstances, ICA will tend to recover the independent signals prior to pre-mixing, rather than negatively-correlated source signals. An alternative method for creating negatively correlated signals without pre-mixing by a correlation matrix is to use phase control. By adjusting the relative phase of two periodic signals, their correlation can be altered. Figure 6 shows two periodic signals along with a graph that shows how the correlation changes with phase shift. It is straightforward using this approach to set the correlation to a desired value, including a particular negative correlation, or alternatively simply to set the phase to the point of maximally negative correlation. The advantage of this approach is that the source signals remain in their original form, without being pre-mixed. Clean signals with a negative correlation provide a useful way of further testing the NCCA algorithm, and this is the method that is used in the remaining two examples.

3.4 Example 3: ICA recovers independent "mixtures", (N)CCA recovers negatively-correlated clean signals

Using the technique of phase shift in generating the negatively-correlated source signals, this example (Figure5) shows the superior performance of (N)CCA in recovering the original source signals. It is notable that ICA recovers signals that are statistically independent, but that do not take the precise shape of the original source signals. In finding independent rather than negatively-correlated signals, ICA is forced to find slight mixtures of the original signals, rather than the pure signals themselves.

3.5 Example 4: Assessing the correlation penalty coefficient ($\lambda$)

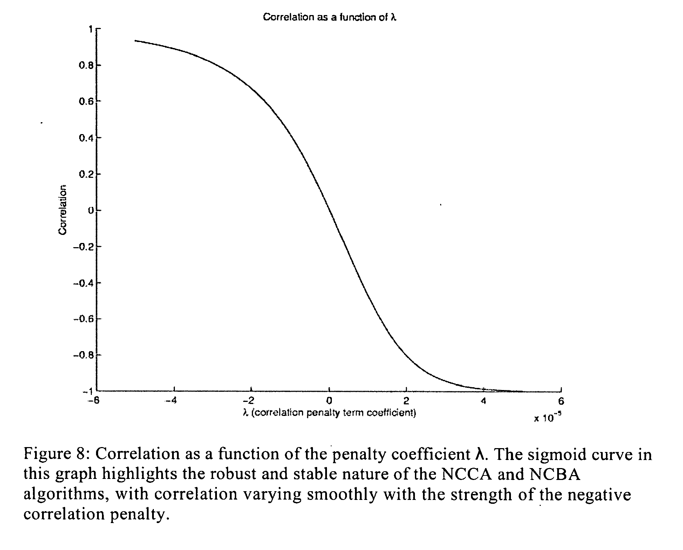

The final example in this section looks at the role of the correlation penalty coefficient ($\lambda$). The value of the coefficient was systematically varied whilst the other experimental parameters (learning rate, epochs etc.) remained constant. It can be seen in figure 8 that the correlation of the derived components changes smoothly with the value of $\lambda$, which shows both the stability of the algorithm under changes to this value, and demonstrates that the negative correlation penalty step offers a way to systematically control the correlation of the components found by (N)CCA (including even making them positively correlated if so desired).

4 Examples of (N)CBA

The (N)CCA algorithm has been shown to be effective in recovering components that are negatively-correlated. The (N)CBA algorithm has a complementary purpose, which is to utilise the noise-reduction and space-filling benefits of negative correlation. It was seen in earlier sections how negatively-correlated basis functions could offer a theoretical advantage over positively-correlated and independent basis functions in representing data with non-negative coefficients. This section contains two practical examples of this advantage in operation, inspired by the widespread use of ICA on natural image processing.

4.1 Example 1: A pre-whitened natural image

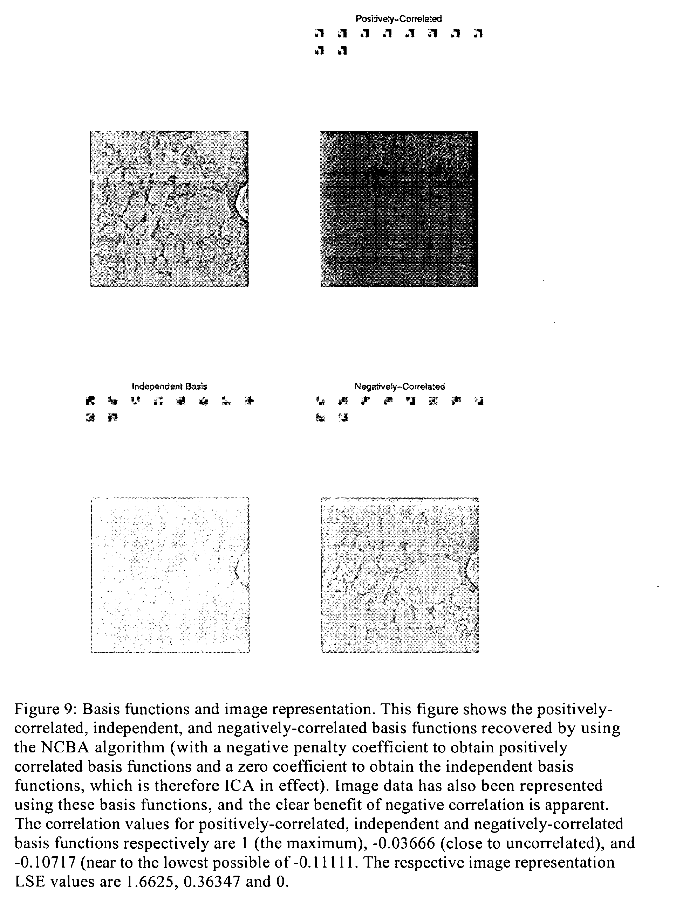

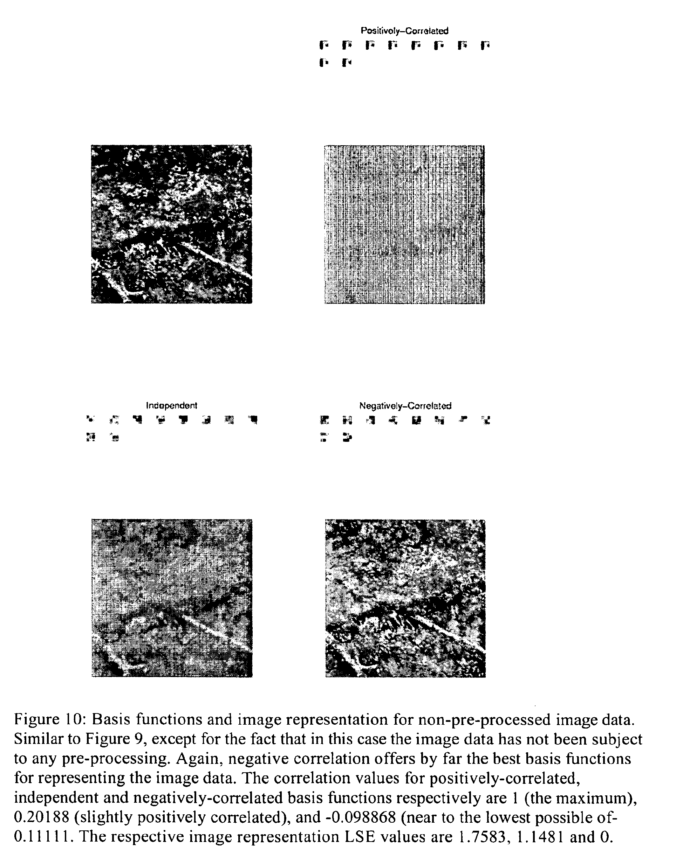

In Figure 9 it can be seen that the original image has been preprocessed with a low-pass whitening filter. This image is actually one that has been used in examples of ICA, where such filtering is common to assist the ICA algorithm in useful basis functions. In order to give a fair trial to ICA, this pre-whitened image is used in the test here. Three different conditions were tested: positive correlation (where $\lambda$ was given a negative value), independent (ICA) and negative correlation ((N)CBA, where $\lambda$ was given a positive value). Figure 9 shows the basis functions found in the three conditions. It is immediately apparent that the positive correlation condition has obtained perfectly correlated basis functions, which is catastrophic for representing data points, as it is equivalent to only having one basis function. The independent and negatively-correlated conditions have found ten different basis functions. The correlation values are given for these, which show that the algorithm has indeed found positively-correlated, uncorrelated, and negatively-correlated basis functions respectively.

Figure 9 also shows the image reproduced by representing each 3x3 image patch as a non-negative linear combination of the basis functions for each of the three conditions, and placed in its appropriate position in the overall image. This technique allows an immediate evaluation of the performance of the algorithms. It is clear that the positively-correlated basis functions have allowed only a very poor representation of the image, not surprising in view of the perfect correlation between the basis functions. More significantly, however, the independent basis functions have also resulted in a rather noisy image reproduction, suggesting that they are suboptimal for this task. Only the negatively-correlated basis functions allow for a perfect reproduction. The reproduction error values are given for all three conditions, corroborating the visual evidence.

4.2 Example 2: An unpreprocessed natural image

Whilst ICA algorithms prefer the data, in this case a natural image, to be preprocessed, in particular pre-whitened, it is worth investigating whether or not the (N)CBA algorithm performs any worse on an image which has not been preprocessed at all.

This example follows the same procedure as the previous one, with positively-correlated, independent, and negatively-correlated conditions. Figure 10 shows that once again, when positive correlation is encouraged, perfectly correlated basis functions are found, whereas the uncorrelated and negatively-correlated conditions find ten different basis functions.

The image reproductions in Figure 10 also follow the pattern of the previous example, with the positively-correlated basis functions allowing the worst image reproduction, followed by the independent basis functions which still give a very noisy reproduction, and then the negatively-correlated basis functions which give a perfect, noise-free, reproduction. It can be seen from the error values as well that the lack of preprocessing of the image did not damage the performance of the algorithm at all, in contrast to that of the ICA algorithm, whose relative performance here was worse than in the previous example.

5 Observations

Negative correlation has several benefits which can result in systems with lower noise, or more accurate representation of information with a limited set of resources. In particular, it has been shown that negatively-correlated noise is reduced in accordance with the central limit theorem much more effectively than independent or positively-correlated noise. It has also been shown that negatively-correlated basis functions allow a more accurate representation of a set of data with non-negative coefficients than the same number of independent or positively-correlated bases.

We have disclosed two algorithms to exploit these statistical benefits of negative correlation, both of which are developments of the ICA approach. (N)CCA finds components which are negatively correlated, whilst (N)CBA finds negatively-correlated basis functions. Both algorithms are based on an ICA core with a lagrangian penalty term encouraging negative correlation, but the algorithms make use of a number of special techniques in order to allow the penalty term to be applied separately, and in a different domain, to the main ICA update step. A number of advantages to this have been outlined, emphasising in particular the compatibility of these new algorithms with a wide variety of existing ICA approaches, as well as their relative efficiency and stability.

Several simple demonstration examples of (N)CCA and (N)CBA have been given here, each chosen to demonstrate a particular feature of the algorithms. These examples show that:-

- (N)CCA offers superior performance to ICA in recovering negatively correlated signals.

- ICA recovers uncorrelated versions of the signals, whilst (N)CCA recovers the actual negatively correlated signals.

- When clean, negatively correlated source signals are generated using a phase-shift technique, ICA tends to recover uncorrelated mixtures of these, whereas (N)CCA recovers the negatively correlated clean original signals.

- (N)CBA gives basis functions which allow more accurate representation of data (image data in the examples given here), allowing better recovery of that data, than ICA.

- (N)CBA appears to be less demanding in terms of required preprocessing of data for than ICA.

- For both algorithms, correlation of components/basis functions varies smoothly as a function of A, the negative correlation penalty coefficient (shown as an (N)CCA example in this paper, but equally valid for (N)CBA also).

Although the (N)CBA examples were in this case given for image reproduction, there is nothing special about image data in this regard, and the result is equally applicable to any data whatsoever, including data in variables that are not themselves negatively-correlated. When non-negative coefficients are used, negative-correlated basis functions will always be on average at least as effective as independent basis functions, and usually more so, at representing any set of data whatsoever.

Another as-of-yet unexploited potential advantage of the (N)CBA algorithm also requires further development.

This concerns the space-filling benefit of negative correlation. It can be shown that at present, the advantage conferred by the space-filling property of negatively correlated basis functions is actually the result not of space-filling per se, but of the increased probability that the basis functions will surround the mean of the data, which therefore allows a more accurate non-negative coefficient representation. When all the basis functions lie in a similar direction from the data mean, as is more likely to happen with positively correlated and uncorrelated basis functions because they are more closely tied together, this will result in the suboptimal representation that is seen in the examples. What this means is that the actual space-filling itself, which results in negatively-correlated basis functions being on average closer to the data points they are representing and hence require on average lower coefficient values, is not yet being exploited by the algorithm. In fact, in systems where resources (which means coefficient values) are costly (including computer systems and biological systems), this space-filling benefit is likely to be important. For example, in neural systems it may result in lower firing rates being needed because individual neurons may be more accurately attuned to individual stimuli. This intriguing idea requires further investigation.

Figure H shows the application of the NCCA algorithm to a physical example. Two original sources, source 1 and source 2, emit respective signals $S_1$ and $S_2$. A detector array 70 has detectors 72a to 72e, and feed detected mixed signals (containing $S_1$ and $S_2$ signals) to a signal processor 74 which has associated memory 75.

Signal processing software 73 running on processor 74 stores the detected, native, signals, reformed as Xa to Xe (not shown) in memory 74. The processor now has stored respective a native signal Xa to Xe for each of the detectors 72a to 72e, effectively allowing the processor to construct the matrix **X** in the equation **Y** = **WX**. The matrix **Y** is what it is desired to calculate, since that is a matrix containing the recovered, original source component signals $S_1$, and $S_2$.

In order to evaluate the matrix y we need the demixing matrix **W**, but that is different for every case (typically). In order to determine what to use as matrix W we assume that the components $S_1$ from a to e, (i.e. S1a, S1b, S1c, S1d, S1e, the components of signal S, received by detectors a to e) are negatively correlated relative to each other, and also that the components $S_{2a}$, $S_{2b}$, $S_{2c}$, $S_{2d}$, $S_{2e}$ are negatively correlated with respect to each other. We aim to minimise the correlations of the recovered components - the matrix elements of matrix **Y**, equivalent to the original source signals (we aim to achieve zero correlation between the recovered component signals of the matrix **Y**).

As disused earlier a complete objective function to be minimised is equation (9):

$$D_{f\|\tilde{f}}(\mathbf{W}) \;=\; \sum_i^m H(y_i) - H(\mathbf{x}) - \log|\det(\mathbf{W})| + \lambda(F(\mathbf{W})) \qquad (9)$$

Which is in this example processed in two stages since it can be represented as equations (10) and (11):

$$\bar{D}_{f\|\tilde{f}}(\mathbf{W}) \;=\; \sum_i^m H(y_i) - H(\mathbf{x}) - \log|\det(\mathbf{W})| \qquad (10)$$

$$D_{f\|\tilde{f}}(\mathbf{W}) \;=\; \bar{D}_{f\|\tilde{f}}(\mathbf{W}) + \lambda(F(\mathbf{W})) \qquad (11)$$

The first step, equation (10) can be performed by standard ICA core algorithms. A simple gradient minimisation approach is then used to reduce the correlation of the derived components y.

Working though equations (12) and (13) given earlier we get to equation (14 and (15)

$$\Delta\bar{\mathbf{W}} \;=\; \eta[\mathbf{W}^{-T} - \mathbf{x}\varphi(\mathbf{W}\mathbf{x}) \qquad (14)$$

$$\Delta\mathbf{W} \;=\; \Delta\bar{\mathbf{W}} - \lambda\frac{dF(\mathbf{W})}{d\mathbf{W}} \qquad (15)$$

We want delta $\Delta$W to be zero, i.e. a stabilised point in the algorithm calculations.

We interactively try one set of values for matrix **W**, perform the operations of equations (10), (11), (12), (13), (14) and (15) and this in the end produces an updated **W**, and finally a stable final **W**.

Thus by actually measuring the received mixed component signals Xa to Xe in Figure H, and by assuming negative correlation between the detected representations of the same components ($S_{1a}$, $S_{1b}$, $S_{1c}$, $S_{1d}$, $S_{1e}$ negatively correlated and $S_{2a}$, $S_{2b}$, $S_{2c}$, $S_{2d}$, $S_{2e}$ also negatively correlated) and assuming no correlation between $S_1$ and $S_2$, we can, by appropriate use of a Lagrangim penalty term to encourage the components to be negatively correlated, obtain values for the component signals $S_1$ and $S_2$.

Other areas where the invention has applicability include areas where there are mixed signals. For example in some forms of medical imaging there may be more than one source of signals, with the signals detected by an array of sensors. For example, MRI scanners/images or ultrasound scanners/images where it might be desired to isolate the contribution made to an image by a particular source. (For example internal organs/structures can be sources of signals: perhaps they just are sources (e.g. MRI) or perhaps they have been injected or infused with something that gives off a signal (e.g. radio imaging).

Images and/or sensors for other purposes may also find use for the invention. For example satellite images could be enhanced.

Another aspect of the invention is associated with identifying the basis functions which can be used to represent the data x in an efficient way:

that is to say what basis functions allow the minimum number of basis functions to be used as the columns of the mixing matrix **A**?

If the number of the basis functions necessary in matrix **A** to matrix-multiply with the signals matrix **S** is minimised then this will have technological benefits. The smaller matrix **A**, the easier it is to process in data processing operations, and hence the faster will a computer be able to perform these processing operations, or the less computing power is needed to perform operations at a specified speed. Also, the smaller is **A**, the less telecommunications bandwidth is required to transport the data, and the less memory is required to store the data. Also, communication within a processor is speeded-up if the number of bases is smaller, which can result in faster processing.

Calculating **A** in the equation:

**x=As** can be done in a similar way to calculating with equation **y = Wx.**

We have discovered that if the bases of A are required to be negatively correlated we can, in NCBA (negatively correlated bases analysis) represent data with fewer basis functions than in normal ICA. Also, the reproduction of the data from the basis functions can be more accurate than with the same number of basis functions that are not negatively correlated.

Figures 9 and 10 show the improved data reproduction achieved by using negatively correlated basis functions.

Figure J1 shows a person 80 undergoing monitoring of their heart using ECG (electrocardiogram) equipment 82. Electrodes/sensors 81 are shown providing a plurality of signals (mixed signals X). Equipment 82 includes a microprocessor 83 and a memory 84, and signal inputs 85, and a processed signal output 86. The processed signal output 86 goes to a display 87 and/or to a printer 88, and/or to a computer memory 89 for storing a patient record of their ECG results.

The processor 83 runs a program 83a which decouples, or separates out, mixed signals X, input by multiple sensors 81 (eight shown in this example) to produce separate component signals. Figure J2 shows eight captured electrical signals 90a to 90h obtained by the eight sensors 81, and three separate component signals 91a, 91b,91c produced by software 83a. The software 83a performs the method of the invention relating to separating out mixed components to produce the three separate component signals 91a to 91c. In this example, we have arbitrarily said there are eight electrodes 81 (there may be more or less) and we have supposed that there are three separate components in mixed electrical signals detected by the sensors 81: there may be more or less in practice.

Separating out, and displaying or recording, separate component signals can be useful in assisting with medical diagnosis for example. EEGs for the brain are another application. Applications where sensors detect the stimulation of nerves (e.g. muscle-activation nerves or pain transmission nerves) are another area of application where it may be desirable to separate out components from complex acquired/detected signals.

It will be appreciated that the invention has uses beyond medical areas where signals are to be separated out. For example in analysing electronic circuitry to asses its condition (e.g. testing equipment), or in testing of articles etc, and indeed in telecommunications.

Figure K1 shows an MRI (magnetic resonance imaging) scanner 102 imaging a slice through a person's body 100. A ring of sensors 101 is shown, the magnetic field generating coils are not shown. In MRI, a strong magnetic field causes molecules in the body to emit radiation which is detected by the detectors 101. Each detector 101 receives radiation from a number of different structures in the body and can be considered to receive mixed component signals. Imaging body structures is the aim, and the detected signals from the many sensors 100 need to be turned into an image.

The MRI scanner 102 has a processor 103 with a memory 104 and receives input signals 105 from the large number of sensors 100 and processes them to produce an output signal 101 which is sent out to one or more, or all, of an electronic display 107, a printer 108, and a computer memory 109.

The invention relating to separating out component signals from received mixed signals is performed by the microprocessor 103. Figure K2 illustrates schematically an image 100 in which there is apparently a first structure 112 and a second structure 114, this image being obtained without using the present invention. It also shows in image 116, which is produced using the present invention, with first structure 112 now having a different image representing it, image 112a, because signals from a second source, represented as 114a in dotted outline, have been separated out.

It will be appreciated that separating out image components from mixed component images is a use of the invention.

Another area where images can be improved, because there are a complex mix of signals, is in ultrasound scans. Another is foetal monitoring (where a mother's signals can be mixed with the baby's signals, or where there may be more than one baby). Another example is where dyes or substances are introduced into the body to make certain structures be more visible in imaging (e.g. radio imaging). Enhanced images could be obtained using the present invention. Another example is in biometric image analysis, e.g. face feature analysis.

In a modification of the embodiment of Figures K1 and K2, the MRI scanner (or other imager/tester for other purposes) takes several "slices" snap-shots of a person (or article to be tested) and negatively correlates the images and sums them to reduce noise. This could be in addition to, or instead of, the decoupling of mixed components in the signals/images. This can create better final images/signals. For example, using a plurality (e.g. several, many, ten, twenty, thirty, or more) shorter exposure images can avoid the person moving during the exposure time of any one snap-shot. Usually, a short exposure time for a detector means that noise is of enhanced significance. The present invention can allow us both individual snap-shots/slices of short exposure and remove significant noise. Possibly the person may be in the MRI scanner for less total time than normal. There are other areas where a short detector exposure may be desirable, for example if a detector is likely to get saturated. Some CCD devices, for example need their sensors re-setting or discharging periodically and in some circumstances it may not be possible to have too long an exposure time. The present invention can help with that in that it can reduce the effect of noise.

Figure L1 shows a fingerprint 120. Figure L2 shows another fingerprint 121. In order to differentiate between the two (for example to check that fingerprint 120 is the same as fingerprint 121) the fingerprints are represented using negatively correlated basis functions of W. The representations of the images of Figures L1 and L2 are shown as basis function representation 122 and 124 respectively. A computer matching 125 of the basis function representations 122 and 124 can be done more easily and reliably than matching the fingerprint images 120 and 121 directly. Known matching/comparison algorithms can operate on the basis function representations rather than the images themselves.

Figures M1 and M2 show another use of representing images as basis functions. This time an image 130 a tumour is shown in Figure M1, and its basis function representation is shown as 130'. Figure M2 shows another image 131 of the tumour taken a time later (two weeks later in this example) after the specified treatment (e.g. a chemotherapy) has been performed and the basis function representation of the image 121 is shown as 131'. The basis function representations 130' and 131' are compared by a comparator 132 to see if there has been a change in the tumour image. The early detection of small changes in the site of tumours, or other things, can be useful. For example, as an indicator as to whether a particular treatment regime is working, and whether to continue with the regime or try another. Many cancer patients have only a finite time to find a treatment that works and the sooner a non-working treatment can be discarded and another tried for efficacy, the better.

Figure N shows schematically a flow chart for the aspect of the invention relating to the reduction of response. Step 140 comprises obtaining a plurality of negatively correlated signals or images (e.g. by generating them from a master, original, signal or image, or by capturing or acquiring them from sensors or from a computer memory). Step 141 is to sum the negatively correlated representations of the same thing (some representations may not be negatively correlated, but taken as a whole, the group of representations is negatively correlated). Step 142 is to store the resultant processed signal or image, or to output it (e.g. to a display or to an external memory).

Figure P shows a flow chart showing method steps in a method of recovering mixed signals from a multi-component signal. Steps 143 to 146 are discussed on the flowchart.

Figure Q shows another representation of the method to recover independent components (CCA). Original data 150 is input, step 152, to a computer processor which creates at step 154 an initial demixing matrix **W,** which may be random or may have a pre-loaded or pre-learned starting content. A main iterative update of **W** loop is started at 156. **W** is updated using an ICA step at 158 (e.g. minimising the K-L equation), and then translated into **Y** at 160. Then **Y** is updated in a penalty correlation penalty update step 162 (e.g. $\lambda(f(\mathbf{W}))$ minimised using a gradient approach), and updated **Y** translated back to an updated **W** at step 164. This ends the main loop at 166 and the resulting updated **W** is fed back at step 163 to the start of the main loop, step 156 again, to be updated in the update loop again. This carries on until a stable solution for **W** is found. Then that stable solution for **W** is used at step 170 to generate the components of **Y** which are output at step 172.

Figure R shows a flow chart representing a method to choose basis functions for **A**. Steps 150' to 158' are the same as for Figure Q and have been referenced the same (but with a dash). At step 174, **W** is translated into **A** (instead of **Y),** and **A** is updated at step 176 using a correlation penalty step (e.g. gradient approach to minimise), and at step 178 updated **A** is translated back into **W,** to give a further updated **W** (further updated in comparison to updated W produced at step 158). Updated **W** is then iteratively fed back to step 156' and the process repeated until **W** is stable. The stable, final, **W** is then used at step 180 to output the basis functions of **A** (e.g. using **A** = **W**⁺) to recover the basis functions at step 182.

Figure S shows a telecommunication embodiment of the invention. A digital picture 190, or video feed (lots of digital pictures in a time sequence) is received or generated by computer 192. The computer has in memory a set of basis functions 194, 196, 198 (in practice there will probably be more than 3) and converts picture 190 into the sum of a weighted set of basis functions using weighting coefficients $\alpha_1$, $\alpha_2$, $\alpha_3$, which it calculates. The basis functions are negatively correlated, for example having been found using the NCBA invention of this application (but possibly having been determined some other way).

The computer 192 transmits over a telecoms network 200, the weighting coefficients $\alpha_1$, $\alpha_2$, $\alpha_3$, (and optionally, but not necessarily, the basis functions themselves) to a remote computer 202 which reconstitutes the picture 190 as picture 204 using the weighting coefficients $\alpha_1$, $\alpha_2$, $\alpha_3$, and the basis functions 194, 196, 198. The computer 202 may already know the basis functions or they may be transmitted to it. Even if the basis functions are transmitted this will still be far less data to transmit, over several pictures or several hundreds or thousands or millions (in the case of video), than transmitting individual pixels values themselves. We have realised that negatively correlated basis functions can represent data (e.g. pictures) signals more efficiently than other basis functions, thereby reducing the number of basis functions necessary in comparison with uncorrelated or positively correlated basis functions, and thereby reducing the number of weighting coefficients that need to be transmitted. This can increase the speed of transmission and reduce the bandwidth required. Storing the pictures/data as basis function representations by storing the weighting coefficients (and knowing the basis functions) also uses less memory.

Figure T shows another telecommunications application of an aspect of the invention. Three different signals 210, 212, 214 are fed to computer 216 (e.g. from transducers, or by communications equipment, e.g. other computer/ processors). Computer 216 adds a known (to it and to remote computer 218 with which it will communicate) signal 220 and sums signals 210, 212, 214 and 220 to create mixed signal 222. This signal 222 is then communicated to remote computer 218 by any suitable means. Remote computer 218 knows that one of the component signals of the signal 222' that it receives is the signal 220 and so can, using the CCA method previously discussed, create a **W** that recovers from **X** (signal 222') signal 220 as one of the independent components of the mixed multi-component signal. Using the same **W** the other independent components are generated. Since computer 218 knows that the decoupling matrix **W** is correct when it sees signal 220, it then has confidence that the other recovered independent signals are what was input. The signal 220 acts as a key to enable **W** to be specified: matching signal 220 to what it should be facilitates solution of the equations.

This can be considered to be multiplexing separate signals, overlaid in the same time. This can be done instead of, or as well as, time division multiplexing. A higher data rate can be achieved (multiple signals in the same time). Faster data transfer, and/or reduced bandwidth capacity (compared to separate signals being transmitted) can be achieved.

In a variant of the embodiment of Figure T instead of (or in addition to) the computer 216 adding reference signal 220, information may be available to computer 218 specifying the degree of correlation between signals 210, 212, and 214 (or indeed a larger number of mixed signals). If the degree of correlation, e.g. negative correlation, is known then the equations of (N)CBA can be solved. In this modification the user of computer 216 conveys the information or the degree of correlation (e.g. minus 0.083) to the user of computer 218 (e.g. via telephones 224 and 226). The user of computer 218 enters that requirement for the degree of negative correlation into computer 218 which can then solve the (N)CBA equations without needing to know the form of one of the component signals. If the recipient of a mixed signal knows the degree of correlation of the component signals, or the form of one of the components, they can recover the other signals. This can be used to encrypt signals/as a security measure.

According to another aspect of the invention, we provide a method of reducing the memory space required to represent a matrix of data, the method comprising representing the matrix of data as a combination of basis functions, the basis functions comprising columns of a transformation matrix which is adapted to transform the matrix of data into a corresponding matrix, and wherein the basis functions are negatively correlated with respect to each other.

Optionally a plurality of transformed data matrices may be combined to form a combined transformed data matrix. The combination may comprise adding or multiplying the plurality of transformed data matrices.

By representing the native data matrix in this way we can represent the data using fewer bits of information. This can reduce data traffic in communications, and/or reduce computing operations necessary to process the data and/or reduce the memory necessary to store data equivalent to the native data matrix.

It will be appreciated that aspects and features of each embodiment may be used with other embodiments.

Having negative correlation (in the examples caused by phase shifts) between instantiations improves performance in relation to reducing the effect of noise and also simultaneously assists in separating multi-component signals into their separate components.

When separating out separate component signals from a mixed component signal we might have no knowledge of the degree of negative correlation. We might putatively try different values of the negative correlation penalty coefficient λ. On the other hand, we might know the degree of correlation, or the approximate correlation (positive or negative) and so we can make a reasonable estimate of the negative correlation coefficient λ. Circumstances where we might know something about the degree of correlation include neuron signals (where we assume a particular degree of negative correlation). Other circumstances include: (i) past experience of similar data; (ii) the data has a known correlation; (iii) if we know the form of the signal we can try varying the negative penalty term until the known signal is recovered; (iv) we know something about the signals.

If we know one of the component signals of a mixed component signal we can work out the rest of the independent components **S** without advance knowledge of the degree of correlation. For example if we ensure that at least one of the component signals is known (e.g. it is deliberately introduced as a known component) we can hunt around for the correct negative penalty correlation term necessary to give us back the known signal. This will automatically also give us back the other components as well. The technique gives access to all components of mixed component signals.

This may enable the provision of a telecoms system in which a known signal is provided and users add their own signals, and users can decouple their own signals by knowing the known signal.

Encryption/security may be achieved/enhanced by using the degree of negative correlation as a decoupling factor. Multiplexing signals can be done using the present invention.

Another example is transmitting a video image - lots of frames per second. We can convert each frame into basis functions and transmit the coefficients of the basis functions (the basis functions themselves being known at the other end of the transmission). This can be considered data compression. Pixel values are typically positive (or at least non-negative) when being transmitted and this lends itself to NCBA. Compared to transmitting raw, pixel by pixel, signals, this can be much faster/done with a limited bandwidth.

Image compression is an area of application of the invention.

We could, for example, multiplex signals (e.g. before transmission or during transmission) and decouple them after transmission. This could improve the volume/speed of data transmission for a given bandwidth.

Areas of application of the invention include data transmission, processing, and storage. The data could be images (image processing, transfer, storage), or voice, or represent chemical signals, or waveforms, as a non-exhaustive group of examples. The data may be transponder-derived data acquired from the real physical world (e.g. representation of images, temperatures, pressures, colours, etc.). The invention may be applied in relation to memory addressing by CPUs/translating data using a CPU. The invention may be applied to hearing aids.

In many aspects of the invention we minimise the independence of a variable by minimising the K-L equation using any approach in one step and minimise the correlation cost function $\lambda f(\mathbf{W})$ using a gradient-based approach in a second step.

It will be appreciated that the inventions disclosed herein can be embodied as computer processors, software for computer processors, systems that include computer processors and optionally sensors and/or a display, and can be performed as methods and processes. Protection for all inventions in all categories of protection is sought, even if some definitions of some of the inventions are not exhaustively iterated in all forms.

Any of the inventions disclosed herein can be used with any other disclosure/invention in any combination.

It will be appreciated that it is possible to transpose everything in a matrix equation and get the same result. Thus $\mathbf{X} = \mathbf{AS}$, and $\mathbf{Y} = \mathbf{WX}$ can be represented by transposed versions $\mathbf{X}^T = \mathbf{S}^T \mathbf{A}^T$, and $\mathbf{Y}^T = \mathbf{X}^T \mathbf{W}^T$, and that protection is sought for such equivalents. The claims should be read so as to cover transposed versions.

References

[1] Hyvärinen, A., Karhunen, J. and Oja, E. (2001): Independent Component Analysis (Wiley)

[2] Olshausen, B.A. and Field, D.J. (1997): Sparse coding with an overcomplete basis set: A strategy employed by VI? Vision Research 37:3311-3325

[3] Hyvärinen, A. and Hoyer, P.O. (2000): Emergence of phase and shift-invariant features by decomposition of natural images into independent feature subspaces. Neural Computation 12:1705-1720 23

[4] Lee, D.D. and Seung, H.S. (2001): Algorithms for non-negative matrix factorization Advances in Neural Information Processing 13

[5] Hoyer, P.O. (2002): Non-negative sparse coding feature subspaces. Neural Networks for Signal Processing 12: 557-565

[6] Nicol, A., Feng, J. and Kendrick, K. (in preparation): Negative Correlation Yields Computational Vigour in a Mammalian Sensory System

[7] Bell, A.J. and Sejnowski, T.J. (1995): An information maximization algorithm that performs blind separation. Advances in Neural Information Processing Systems 7:456-474 (MIT Press)

[8] Amari, S. (1999): Natural gradient learning for over- and under-complete bases in ICA. Neural Computation 11: 1875-1883

[9] Hyvärinen, A. and Oja, E. (1997): A fast fixed-point algorithm for independent component analysis. Neural Computation 9,7:1483-1492

**Claims**

1.  A method of signal processing a native signal which includes a true signal and noise, the noise being at a different frequency than the true signal, comprising summing a plurality of negatively correlated instantiations of the native signal to produce a processed signal that is more representative of said true signal than is said native signal.

2.  A method according to claim 1 comprising taking a native signal and generating from it at least one, and preferably a plurality of, negatively correlated instantiation(s) of said native signal to form said plurality of negatively correlated instantiations of said native signal.

3.  A method according to any proceeding claim in which instantiations of said native signal have a phase difference imposed upon them.

4.  A method according to claim 1 in which the instantiations of the native signal are acquired with a phase difference existing between them.

5.  A method according to claim 4 comprising using sensors of a sensor array to acquire respective instantiations of a negative signal with a phase difference between instantiations derived from the sensors.

6.  A method according to any proceeding claim in which said native signal comprises one or more temporal or spatial frequency.

7.  A method according to any proceeding claim in which said native signal comprises a waveform.

8.  A method according to any claim 1 to 7 in which said native signal comprises an image.

9.  A method according to claim 2 or any claim dependent directly or indirectly from claim 2, comprising a method of reducing noise wherein a phase shift of half or about half of a period of noise desired to be reduced ($\frac{1}{2f}$ where f is the noise frequency) is introduced between the native instantiation of the signal and the negatively correlated generated instantiation of the signal.

10. A signal processor programmed to take a plurality of negatively corrected instantiations of a native signal and sum them to produce a processed signal.

11. A signal processor according to claim 10 programmed to generate the plurality of negatively correlated instantiations from a source signal.

12. A signal processor according to claim 11 programmed to generate a plurality of instantiations of the native signal, each phase shifted by an amount relative to the native signal, and wherein in order to suppress noise at a particular selected noise frequency one of the generated instantiations is phase shifted relative to the original native signal by about half a period of the selected noise frequency, each generated instantiations of the native signal being phase shifted by an amount to suppress noise at a different noise frequency.

13. A signal processor according to claim 10 which is adapted to receive the plurality of instantiations of the native signal, with the instantiations already being negatively correlated.

**14.** A signal processing system including at least one sensor or data capturer and a signal processor in accordance with any one of claims 10 to 13.

**15.** A system according to claim 14 comprising a plurality of sensors or data capturers adapted to provide negatively correlated native signal instantiations to the signal processor.

**16.** A computer program product which when run on a computer processor is adapted, in use, to take, or create, a plurality of negatively correlated native signals comprising a true signal and noise and sum them so as to preferentially reduce noise that is at a different frequency to the true signal.

**17.** A computer-implemented method of processing mixed signals to recover decoupled separate components from a mixed multi-component signal, the method comprising:

(i) acquiring a plurality of mixed component signals, **X** (vector); and
(ii) finding a, or the best, simultaneous solutions to restrictions to both: -

(a) maximise independence of the recovered separate component signals given by rows of **Y** (matrix) in the relationship **Y= WX**, where **W** (matrix) is a decoupling matrix for operating on **X** so as to produce **Y**; and also
(b) exhibit a selected target correlation between the separate component signals (rows of **Y**).

**18.** A method according to claim 17 wherein higher order moments of **Y** (i.e. above $2^{nd}$ order correlation) are constrained to be independent.

**19.** A method according to claim 17 or claim 18 wherein the signal components comprising rows of **Y**, are different in number from the rows of **X**, the mixed data components.

**20.** A method according to any one of claims 17 to 19 comprising evaluating solutions for the equation **Y = WX** using one or more pre-selected assumed correlations as the target correlation between the basis functions of **W** (the columns or rows of **W**).

**21.** A method according to claim 18 or any claim depending directly or indirectly from claim 18 comprising evaluating possible solutions to the equation iteratively in two steps at each iteration, said steps comprising a first step which seeks to evaluate the independence of higher order moments of the rows of **Y**, and a second step which seeks to evaluate the compliance of the rows of **Y** having a particular selected putative degree of correlation.

**22.** A method according to any of claims 17 to 21 wherein maximising the independence of the higher moments of **Y** is achieved by minimising the difference between the joint and marginal distributions of the rows of **Y**.

**23.** A method according to claim 22 wherein an objective function that is minimised is:

$$D_{f\|\hat{f}}(\mathbf{W}) \;\; = \;\; \sum_i^m H(y_i) - H(\mathbf{x}) - \log |\det(\mathbf{W})| + \lambda(F(\mathbf{W})) \qquad (9)$$

**24.** A method according to claim 23 wherein the value of $\lambda$ is putatively set at one or more different values and the function minimised for each value so as to establish a set of components (rows of **Y**) which best represent the original components.

**25.** A method according to any one of claims 17 to 24 comprising calculating the standard K-L divergence function

$$\Rightarrow D_{f\|}(W) = \sum_i^m H(y_i) - H(\mathbf{x}) - \log |\det(W)|$$

in a first step, and applying a negative correlation penalty term, $\lambda(F(\mathbf{W}))$, in a second step.

**26.** A method according to claim 25 wherein the K-L divergence function is optimised using a first optimisation technique and the reduction of the correlation between the derived components is optimised using a second optimisation technique, optionally a gradient-based step.

**27.** The method of claim 26 wherein the independence of the higher order moments of **Y** is evaluated using any known or novel ICA algorithm.

**28.** The method of claim 26 or claim 27 wherein the second algorithm uses a gradient approach to optimising the derived components of **Y**.

**29.** The method of any one of claims 17 to 28 comprising iteratively updating the values of the decoupling matrix **W** using the gradient of the objective function with respect to **W** to control the updating of the values.

**30.** The method of claim 29 comprising using the following iterative steps to update the decoupling matrix **W**:-

$$\Delta \bar{\mathbf{W}} \;=\; \eta \left[ \mathbf{W}^{-T} - \mathbf{x}\varphi(\mathbf{W}\mathbf{x}) \right] \qquad (14)$$

$$\Delta \mathbf{W} \;=\; \Delta \bar{\mathbf{W}} - \lambda \frac{dF(\mathbf{W})}{d\mathbf{W}} \qquad (15)$$

**31.** A method according to any one of claims 17 to 30 in which a correlation update step of the matrix **W** is calculated in the **Y** domain and is converted back to the **W** domain for the actual update of **W**.

**32.** A method according to any one of claims 17 to 31 wherein the decoupling matrix **W** is calculated using an ICA update step and then the resultant components of **Y** are made more negatively correlated, or are correlated more closely to a specified set level of correlation, using a gradient step evaluation of a correlation penalty function:

$$\frac{dF(Y)}{Y} = \begin{bmatrix} 2\sum y_i \\ 2\sum y_i \\ \vdots \\ 2\sum y_i \end{bmatrix}$$

where

$$F(Y) = \sum YY^T$$

**33.** A method according to claim 23, or any claim dependent directly or indirectly from claim 23, in which there is a separate negative correlation update step.

**34.** A method according to any one of claims 17 to 33 wherein said acquiring comprises:

(i) obtaining the mixed component signals **X** from a plurality of sensors; or
(ii) obtaining a plurality of mixed component signals **X** from a computer memory.

**35.** A computer product comprising software adapted to be run on a computer processor having access to a computer memory, the product being adapted to separate component signals **Y** of a plurality of mixed component signals **X** held in the computer memory by using the equation **Y = WX** and by finding a solution, or the best solution for **Y,** whilst satisfying a restraint to maximise the independence of the recovered separate component signals given by the rows of **Y**, and also satisfying a restraint for the separate component signals to have a specified target correlation.

**36.** A computer product according to claim 35 wherein the product is adapted to cause a first evaluation of **W** to be stored in memory and updated iteratively by successive future evaluations of **W**.

**37.** A computer product according to claim 36 wherein which is adapted to update **W** by calculating and storing in memory:-

$$\Delta \bar{\mathbf{W}} \;=\; \eta[\mathbf{W}^{-T} - \mathbf{x}\varphi(\mathbf{Wx})] \qquad (14)$$

$$\Delta \mathbf{W} \;=\; \Delta \bar{\mathbf{W}} - \lambda \frac{dF(\mathbf{W})}{d\mathbf{W}} \qquad (15)$$

**38.** A computer-implemented method of determining basis functions **a** to represent data

$$\mathbf{X} = \mathbf{AS},$$

where **S** = original data matrix wherein the source components **s** are the rows of **S**,
**X** = mixed components derived from **S,**
**A** = the mixing matrix which when it operates on **S** produces **X**, and wherein the basis functions **a** are the columns of matrix **A**,
the method comprising:

    (i) acquiring a plurality of mixed components **X;** and
    (ii) finding a solution, or the best simultaneous solutions, to restrictions to both:-

        (a) maximise independence of the source components, **s**; and also
        (b) exhibit a selected target correlation between the basis functions **a**.

**39.** A method according to claim 38 wherein the basis functions are specified as being negatively correlated.

**40.** A method according to claim 38 or 39 wherein the final values of the source components are required to be non-negative.

**41.** A method according to any of claims 38 to 40 wherein the source components are constrained to be independent.

**42.** A method according to any of claims 38 to 41 comprising evaluating possible solutions to the equation iteratively in two steps at each iteration, said steps comprising a first step in which the independence of the source components **S** is evaluated, and a second step in which compliance of the columns of **A** having a particular selected putative degree of correlation is evaluated.

**43.** A method according to any of claims 38 to 42 wherein maximising the independence of the source components **S** is achieved by minimising the difference between the joint and marginal distributions of the rows of **S**.

**44.** A method according to claim 43 wherein an objective function that is minimised is:-

$$\Rightarrow \mathrm{D}_{f\mathrm{W}}(\mathbf{W}) \;=\; \sum_{i}^{m} \mathrm{H}(s_i) - \mathrm{H}(x) - \log\left|\det(\mathbf{W})\right| + \lambda\,(\mathrm{F}(\mathbf{W}))$$

**45.** A method according to claim 44 wherein the value of $\lambda$ is putatively set at one or more different values and the function is minimised for each value so as to establish a set of components (rows of S) and basis functions (columns of **A**) which best allow **X** to be represented in fewer dimensions with minimal loss of information.

46. A method according to any of claims 38 to 45 comprising calculating the K-L divergence function

$$D_{\text{fif}}(\mathbf{W}) \; = \; \sum_i^m \; H(s_i) \; - \; H(x) \; - \; \log \; \big| \det(\mathbf{W}) \big|.$$

47. A method according to claim 46 wherein the K-L divergence function is optimised using a first optimisation technique, and the reduction of the correlation between the derived basis functions is optimised using a second, optionally different, optimisation technique.

48. The method of claim 47 wherein the independence of the source components **S** is evaluated using an ICA algorithm.

49. The method of any of claims 38 to 48 wherein the second algorithm uses a gradient approach to optimising the basis functions of **A**.

50. The method of any of claims 38 to 49 comprising iteratively updating the values of the pseudoinverse of the basis function matrix **A**, called **W**, using the gradient of the objective function with respect to **W** to control updating of the values of **W**, and so by implication the values of **A**.

51. The method of claim 50 utilising a matrix **W** used in the update procedure, given by the Moore-Penrose pseudoinverse, such that **W = A⁺.**

52. The method of claim 50 or claim 51 comprising using the following iterative steps to update the matrix **W**:-

$$\Delta\bar{\mathbf{W}} \;\; = \;\; \eta[\mathbf{W}^{-T} - \mathbf{x}\varphi(\mathbf{W}\mathbf{x})] \qquad\qquad (14)$$

$$\Delta\mathbf{W} \;\; = \;\; \Delta\bar{\mathbf{W}} - \lambda\frac{dF(\mathbf{W})}{d\mathbf{W}} \qquad\qquad (15)$$

53. A method according to any of claims 38 to 52 in which a correlation update step of the matrix **W** is calculated in the **A** domain and is converted back to the **W** domain for the actual update of **W**.

54. A method according to any of claims 38 to 53 wherein the matrix **W** is calculated using an ICA update step and then the basis functions in **A** are made more negatively correlated, or are correlated more closely to a specified set level of correlation, using a gradient step evaluation of a correlation penalty function:

$$\frac{dF(A)}{A} = \begin{bmatrix} 2\sum a_i \\ 2\sum a_i \\ \vdots \\ 2\sum a_i \end{bmatrix}$$

where

$$F(A) = \sum AA^T$$

**55.** A method according to claim 46, or any claim dependent directly or indirectly from claim 46, in which there is a separate negative correlation update step.

**56.** A method of representing data comprising use of the method of any of claims 38 to 55.

**57.** A method according to any one of claims 17 to 34 wherein the basis function of **W** are calculated using the method of any of claims 38 to 56.

**58.** A method of discriminating between a first and second similar signal comprising representing the signals using negatively correlated basis functions selected in accordance with any one of claims 38 to 56, and comparing the so-represented equivalent signals.

**59.** A method according to claim 58 where the original data **X** are converted into an alternative representation **S** comprising a set of coefficients of the negatively-correlated basis functions **A**, and wherein signals **S** are discriminated.

**60.** A method according to claim 58 or claim 59 wherein the signals comprise a signal of the group:

    (i) time varying signal;
    (ii) an image; and
    (iii) time varying images.

**61.** A computer-implemented method of recovering individual component signals from a mixed, multi-component, signal comprising:

    (i) acquiring a plurality of instantiations of the mixed signal;
    (ii) maximising the independence of the components of the recovered component signals;
    (iii) ensuring the higher order moments of a demixing matrix **W** are minimised, **W** being such that when it operates on the recovered component signals the mixed signals are produced;
    (iv) calculating the recovered component signals of the multi-component mixed signal so as to satisfy the constraints of (ii) and (iii).

**62.** A method according to claim 61 which comprises minimising the negative gradient of the demixing matrix **W,** where **y** (the recovered component signals) and **x** (the mixed component signals), are related by:

$$\mathbf{y} = \mathbf{W}\mathbf{x}.$$

**63.** A method according to claim 61 or claim 62 where the negative gradient of **W** is taken to be:

$$\Delta \bar{\mathbf{W}} \;=\; \eta [\mathbf{W}^{-T} - \mathbf{x}\varphi(\mathbf{W}\mathbf{x}) \qquad\qquad (14)$$

$$\Delta \mathbf{W} \;=\; \Delta \bar{\mathbf{W}} - \lambda \frac{dF(\mathbf{W})}{d\mathbf{W}} \qquad\qquad (15)$$

and wherein Δ**W** is minimised.

**64.** A signal or image processor comprising:

    a signal or image input channel;
    a computer processor;
    software runable upon said computer processor;
    a computer memory accessible by said computer processor;
    a processed signal or image output channel;

wherein the software is adapted to store in the memory data received via the input channel relating to a number of negatively correlated instantiations of the value of a signal or image in the memory and to sum the values of the negatively correlated instantiations so as to produce a processed signal or image, and to output the processed signal or image via the output channel.

65. A method of reducing computer processing power required to process data **X** comprising representing the data **X** as **AS** using the method of claim 38 and processing **S** or **AS**.

66. A method of reducing computer memory required to store data **X** comprising representing the data **X** as **AS** using the method of claim 38 and storing **S** or **AS**.

67. A method of reducing communications bandwidth required and/or improving speed of data transmission to transfer data **X** between two places, the method comprising representing the data **X** as **AS** using the method of claim 38 and transferring **S** or **AS**.

68. A method of representing signals, or data comprising representing it as a mixture of basis functions that are negatively correlated.

69. A method according to claim 68 wherein the basis functions are determined using the method of any one of claims 38 to 57.

70. A method according to claim 68 or claim 69 wherein all of the basis functions of a group of different basis functions are negatively correlated, the group being large enough to enable the signal or data to be represented.

71. A method according to any one of claims 68 to 70 comprising a method of compressing signals, or data.

72. Use of negative correlation of instantiations of a signal to reduce the effect of noise.

73. Use of a correlation penalty coefficient in iterative computer processing of data to produce a stable solution to either (i) decoupling mixed component signals into separate components signals, or (ii) determining basis functions to be used to represent data.

74. Use according to claim 73, wherein the penalty coefficient is $\lambda$ **F(W),** where **W** is a demixing matrix.

75. Use according to claim 73 or claim 74 wherein the effect of the penalty coefficient is minimised in a separate minimisation step to the minimisation of a source or separate component signal function.

76. A method according to claim 2 or any claim dependent directly or indirectly from claim 2, comprising a method of reducing noise, wherein a number of instantiations of the signal are phase shifted, one for each frequency of noise to be reduced, and wherein they are each phase shifted about half a period for the respective frequencies of noise they are to reduce ($\sum_{fn} \dfrac{1}{2\,fn}$ , where the fn are noise frequencies).

77. A method according to any one of claims 1 to 9, or claim 76, comprising having n negatively correlated instantiations of the native signal and having a degree of negative correlation of about minus $\dfrac{1}{n}$.

*Fig. A1*

*Fig. A2*

*Fig. A3*

*Fig. B1*   *Fig. B2*   *Fig. B3*

34

EP 1 727 072 A1

62

*Fig. C1*

*Fig. C2*

*Fig. C3*

*Fig. C4*

*Fig. C5*

*Fig. D3*

*Fig. D2*

*Fig. D1*

*Fig. E1*

$$A = \sum_t A_n$$

*Fig. E2*

**Fig. F1**

**Fig. G**

Figure 1: Central limit shrinkage of negatively-correlated noise. As the number of noise instances (samples) increases, negatively-correlated noise shrinks to zero, whereas independent and positively-correlated noise asymptote at higher values. This shows how negative correlation can eliminate noise that would otherwise remain.

Original Image

Positively-Correlated Noise

Independent Noise

Negatively-Correlated Noise

Figure 2: Benefit of negatively-correlated noise. With ten separate samples of noise added to the original image, the differing effects of the correlation of the noise can clearly be seen here. In particular, negatively-correlated noise largely disappears leaving original image clearly visible.

Figure 3: Efficacy of negatively-correlated basis functions. The negatively-correlated basis functions (black diamonds) are more widely distributed than the positively-correlated basis functions (white circles), and offer a more useful basis for representing the data points (crosses). The non-negative least-squares error for representing the data is 0 for the negatively-correlated bases, but 122.94 for the positively-correlated bases.

Figure 4: NCCA vs ICA for signal recovery. This shows the central benefit of the NCCA algorithm, which gives a better recovery of the original, negatively-correlated signals than ICA. The correlation of the ICA components was 0.0082009, whereas that of the NCCA components was -0.35562, much closer to the original signals correlation of -0.4.

Figure 5: ICA recovering uncorrelated signals. Where the signals are pre-mixed to be negatively-correlated, before the main mixing stage to produce the mixed data, ICA recovers the first, uncorrelated versions of the signals, whereas NCCA recovers the desired, negatively-correlated signals. The correlation of the ICA components was 0.038128, whereas that of the NCCA components was -0.42265, again much closer to the original signals correlation of -0.4.

Figure 6: Correlation control using phase shift. Sinusoidal and saw-tooth source signals are shown, along with the correlation between these two signals as a function of the phase between them.

Figure 7: ICA recovering independent mixtures. This example shows that when clean negatively-correlated source signals are created using the phase-shift technique, ICA tends to recover independent versions of these signals, which are mixtures of the original source signals, whereas NCCA tends to recover the actual source signals. The correlation of the ICA components was 0.25919, somewhat positively correlated, whereas that of the NCCA components was -0.31384, once again much closer to the original signals correlation of -0.35089.

Figure 8: Correlation as a function of the penalty coefficient λ. The sigmoid curve in this graph highlights the robust and stable nature of the NCCA and NCBA algorithms, with correlation varying smoothly with the strength of the negative correlation penalty.

Positively-Correlated

Independent Basis

Negatively-Correlated

Figure 9: Basis functions and image representation. This figure shows the positively-correlated, independent, and negatively-correlated basis functions recovered by using the NCBA algorithm (with a negative penalty coefficient to obtain positively correlated basis functions and a zero coefficient to obtain the independent basis functions, which is therefore ICA in effect). Image data has also been represented using these basis functions, and the clear benefit of negative correlation is apparent. The correlation values for positively-correlated, independent and negatively-correlated basis functions respectively are 1 (the maximum), -0.03666 (close to uncorrelated), and -0.10717 (near to the lowest possible of -0.11111. The respective image representation LSE values are 1.6625, 0.36347 and 0.

Positively—Correlated

Independent

Negatively—Correlated

Figure 10: Basis functions and image representation for non-pre-processed image data. Similar to Figure 9, except for the fact that in this case the image data has not been subject to any pre-processing. Again, negative correlation offers by far the best basis functions for representing the image data. The correlation values for positively-correlated, independent and negatively-correlated basis functions respectively are 1 (the maximum), 0.20188 (slightly positively correlated), and -0.098868 (near to the lowest possible of-0.11111. The respective image representation LSE values are 1.7583, 1.1481 and 0.

EP 1 727 072 A1

SOURCE 2
X

S2

SOURCE 1
X

S1

72c

72d

72e

72b

72a

70

74

73

75

$x_a$

$x_b$

$x_c$

$x_d$

$x_e$

$y_1$

$y_2$

*Fig. H*

*Fig. J1*

*Fig. J2*

*Fig. K1*

*Fig. K2*

*Fig. L1*

*Fig. L2*

*Fig. M1*

*Fig. M2*

Obtain or create plurality of negatively
correlation signals or images  —140

Sum to improve noise —141

Store or output —142

# Fig. N

A | Obtain a plurality of instantiations of signals or images containing mixed component signals | —143

B | Use: (I) A matrix Y of mixed separate components values as one set of known elements

(II) Constrain solutions to $\underline{Y} = \underline{WX}$ ($\underline{Y}$ = matrix of separate component signals, $\underline{X}$ = matrix of mixed signals for different instantiations, $\underline{W}$ = decoupling matrix), so as to both (a) maximise the independence of the individual component signals of Y, and so as to (b) achieve a specified selected degree of correlation between the same separate components present in different instantiations of the mixed component signals $\underline{X}$ $\underline{Y}$

144

C | Iteratively repeat B with updated $\underline{W}$ until a better or acceptable solution is found

145

D | Output separated independent components of Y | —146

## Fig. P

NccA

FIG 12

Start

Original Data → Input Original Data ~ 152

150

Create Initial Random W matrix ~ 154

Start Main Loop ~ 156

Update W using ICA step ~ 158

Translate into Y: $Y = WX$ ~ 160

168 ~

Update Y using correlation penalty step ~ 162

Translate into W: $W = YX^+$ ~ 164

End Main Loop ~ 166

172

Recovered Components Y ← Output Recovered Components Y ~ 170

End

NCBA

FIG. R

Start

Original Data — 150'

Input Original Data — 152'

Create Initial Random W matrix — 154'

Start Main Loop — 156'

Update W using ICA step — 158'

Translate into A: $A = W^+$ — 174

Update A using correlation penalty step — 176

Translate into W: $W = A^+$ — 178

168'

End Main Loop — 166'

Basis Functions A — 182

Output Basis Functions A — 180

End

$$\alpha_1, \alpha_2, \alpha_3$$

$$\alpha_1, \alpha_2, \alpha_3$$

$$\alpha_1, \alpha_2, \alpha_3$$

*Fig. S*

*Fig. T*

**European Patent Office**

## EUROPEAN SEARCH REPORT

Application Number

EP 05 25 3204

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRATT W K: "Digital Image Processing, PASSAGE" DIGITAL IMAGE PROCESSING : PIKS INSIDE, NEW YORK : JOHN WILEY & SONS, US, 2001, pages 364-365, XP002368352 ISBN: 0-471-37407-5 * page 364, line 25 - page 365, line 2 * | 1,2,6-8, 10,11, 13-16 | INV. G06K9/00 G06K9/62 |
| X | JOE ROBERTS: "Amateur Astronomer's Notebook - Noise Reduction in digital (CCD and Webcam) Imaging"[Online] 22 October 2003 (2003-10-22), pages 1-12, XP002365520 Retrieved from the Internet: URL:http://www.rocketroberts.com/astro/ccd noise.htm> [retrieved on 2006-01-23] * page 1 - page 2 * | 1,2,6-8, 10,11, 13-16 | |
| X | US 3 807 392 A (HARRIS G,US) 30 April 1974 (1974-04-30) * column 25, paragraph 1 * | 1,2,6-8, 10,11, 13-16 | |
| | | | TECHNICAL FIELDS SEARCHED (IPC) |
| X | EP 0 314 494 A (SEIKO EPSON CORPORATION) 3 May 1989 (1989-05-03) * column 7, paragraph 2 * | 1,2,6-8, 10,11, 13-16 | G06K |
| X | US 4 883 065 A (KELEN ET AL) 28 November 1989 (1989-11-28) * column 7, paragraph 2 * | 1,2,6-8, 10,11, 13-16 | |
| X | US 5 020 538 A (MORGAN ET AL) 4 June 1991 (1991-06-04) * column 2, line 19 - line 24 * | 1,2,6-8, 10,11, 13-16 | |

-/--

~~The present search report has been drawn up for all claims~~

| Place of search | Date of completion of the search | Examiner |
|---|---|---|
| The Hague | 2 June 2006 | Granger, B |

EPO FORM 1503 03.82 (P04C01)

**European Patent Office**

**EUROPEAN SEARCH REPORT**

Application Number

EP 05 25 3204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/058976 A1 (OHTA GEN-ICHIRO ET AL) 27 March 2003 (2003-03-27)<br><br>* page 10, paragraph 136 *<br>----- | 1,2,6-8, 10,11, 13-16 | |
| X | US 2004/196738 A1 (TAL-EZER HILLEL) 7 October 2004 (2004-10-07)<br><br>* page 6, paragraph 93 *<br>----- | 1,2,6-8, 10,11, 13-16 | |
| X | BERND JÄHNE: "Digitale Bildverarbeitung" 2002, SPRINGER , BERLIN , XP002365528<br><br>* page 269 - page 270 *<br>----- | 1,2,6-8, 10,11, 13-16 | |
| X | JERRY LODRIGUSS: "Compositing Methods Part 1"[Online] 6 March 2005 (2005-03-06), XP002365521 Retrieved from the Internet: URL:http://www.astropix.com/HTML/J_DIGIT/COMPEXP1.HTM> [retrieved on 2006-01-19] * page 1 - page 2 * | 1,2,6-8, 10,11, 13-16 | |
| L | & "Internet Archive Wayback Machine"[Online] Retrieved from the Internet: URL:http://web.archive.org/web/*/http://www.astropix.com/HTML/J_DIGIT/COMPEXP1.HTM> [retrieved on 2006-01-23]<br>-----<br><br>-/-- | | TECHNICAL FIELDS SEARCHED (IPC) |

The present search report has been drawn up for all claims

| Place of search | Date of completion of the search | Examiner |
|---|---|---|
| The Hague | 2 June 2006 | Granger, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**European Patent Office**

**EUROPEAN SEARCH REPORT**

Application Number

EP 05 25 3204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S. DURRANT ET AL: "Negatively-Correlated Component Analysis" BIOINFORMATICS AND MACHINE LEARNING GROUP, UNIVERSITY OF SUSSEX, [Online] 1 December 2004 (2004-12-01), pages 1-23, XP002381802 Brighton, UK Retrieved from the Internet: URL:http://www.informatics.sussex.ac.uk/users/chrisla/papers/NCCA_Paper1.pdf> [retrieved on 2005-12-02] * the whole document * | 17-35,57 | |
| L | & CHRIS LADROUE: "Main/Bibliography" INFORMATICS, UNIVERSITY OF SUSSEX, [Online] XP002381803 Brighton, UK Retrieved from the Internet: URL:http://www.cogs.susx.ac.uk/users/chrisla/index.php?n=Main.Bibliography> [retrieved on 2006-05-19] * page 9, paragraph DURRANT04 * This document is cited to establish that the document "Negatively-Correlated Component Analysis" was published in 2004 (see link referred as "durrant04" and the corresponding bibiographical data,p. 9) ----- | 17-37,57 | |
| X | S DURRANT ET AL: "Algorithms for Exploiting Negative Correlation" CENTRE FOR SCIENTIFIC COMPUTING AND COMPUTER SCIENCE, WARWICK UNIVERSITY, [Online] 12 February 2005 (2005-02-12), pages 1-28, XP002381804 Coventry, UK Retrieved from the Internet: URL:http://www.dcs.warwick.ac.uk/~feng/papers/simon1.pdf> [retrieved on 2005-12-02] * the whole document * -/-- | 17-37,57 | TECHNICAL FIELDS SEARCHED (IPC) |

~~The present search report has been drawn up for all claims~~

| Place of search | Date of completion of the search | Examiner |
|---|---|---|
| The Hague | 2 June 2006 | Granger, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 25 3204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | & J. F. FENG: "The Research Interest" CENTRE FOR SCIENTIFIC COMPUTING AND COMPUTER SCIENCE, WARWICK UNIVERSITY, [Online] 12 February 2005 (2005-02-12), pages 1-8, XP002381824 Coventry, UK Retrieved from the Internet: URL:http://www.dcs.warwick.ac.uk/~feng/full_list.html> [retrieved on 2005-12-02] This document is cited to show that the document "Algorithms for exploiting..." was published before 12.02.2005 * page 1, paragraph 105 * | 17-37,57 | |
| L | & ANONYMOUS: "Properties" MICROSOFT INTERNET EXPLORER 6.0.2800.1106, 2 December 2005 (2005-12-02), pages 1-1, XP002381825 Cited to establish the publication date (12 Feb. 2005) of the document "Research Interests" by Feng and thus of the document "Algorithms for Exploiting..." ----- | 17-37,57 | |
| | | | TECHNICAL FIELDS SEARCHED (IPC) |
| D,X | HOYER P O: "NON-NEGATIVE SPARSE CODING" NEURAL NETWORKS FOR SIGNAL PROCESSING. PROCEEDINGS OF THE IEEE SIGNAL PROCESSING SOCIETY WORKSHOP, XX, XX, vol. 12, 2002, pages 557-565, XP008056838 * the whole document * ----- | 13-37,57 | |

~~The present search report has been drawn up for all claims~~

| Place of search | Date of completion of the search | Examiner |
|---|---|---|
| The Hague | 2 June 2006 | Granger, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

European Patent
Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-37,57, 76-77

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION**
**SHEET B**

Application Number

EP 05 25 3204

The Search Division considers that the present European patent application does not comply with the requirements of unity of invention and relates to several inventions or groups of inventions, namely:

1. claims: 1-16, 76-77

   Method of signal processing for noise reduction by summing negatively correlated signal instantiations having a phase difference.
   ---

2. claims: 17-37, 57

   Computer-implemented method of processing mixed signals to recover separate components.
   ---

3. claim: 38

   Computer-implemented method of determining basis functions to represent data.
   ---

## ANNEX TO THE EUROPEAN SEARCH REPORT
## ON EUROPEAN PATENT APPLICATION NO.

EP 05 25 3204

This annex lists the patent family members relating to the patent documents cited in  the above-mentioned European search report.
The members are as contained in the European Patent Office EDP file on
The European Patent Office is in no way liable for these particulars which are merely  given for the purpose of information.

02-06-2006

| Patent document cited in search report | | Publication date | Patent family member(s) | Publication date |
|---|---|---|---|---|
| US 3807392 | A | 30-04-1974 | NONE | |
| EP 0314494 | A | 03-05-1989 | NONE | |
| US 4883065 | A | 28-11-1989 | NONE | |
| US 5020538 | A | 04-06-1991 | NONE | |
| US 2003058976 | A1 | 27-03-2003 | NONE | |
| US 2004196738 | A1 | 07-10-2004 | EP        1616202 A2<br>WO    2004090573 A2 | 18-01-2006<br>21-10-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HYVÄRINEN, A. ; KARHUNEN, J. ; OJA, E.** Independent Component Analysis. Wiley, 2001
- **OLSHAUSEN, B.A. ; FIELD, D.J.** Sparse coding with an overcomplete basis set: A strategy employed by VI?. *Vision Research,* 1997, vol. 37, 3311-3325
- **HYVÄRINEN, A. ; HOYER, P.O.** Emergence of phase and shift-invariant features by decomposition of natural images into independent feature subspaces. *Neural Computation,* 2000, vol. 12, 1705-1720
- **LEE, D.D. ; SEUNG, H.S.** Algorithms for non-negative matrix factorization. *Advances in Neural Information Processing,* 2001, vol. 13
- **HOYER, P.O.** Non-negative sparse coding feature subspaces. *Neural Networks for Signal Processing,* 2002, vol. 12, 557-565
- **NICOL, A. ; FENG, J. ; KENDRICK, K.** *Negative Correlation Yields Computational Vigour in a Mammalian Sensory System*
- An information maximization algorithm that performs blind separation. **BELL, A.J. ; SEJNOWSKI, T.J.** Advances in Neural Information Processing Systems. MIT Press, 1995, vol. 7, 456-474
- **AMARI, S.** Natural gradient learning for over- and under-complete bases in ICA. *Neural Computation,* 1999, vol. 11, 1875-1883
- **HYVÄRINEN, A. ; OJA, E.** A fast fixed-point algorithm for independent component analysis. *Neural Computation,* 1997, vol. 9 (7), 1483-1492